# EUROPEAN PATENT APPLICATION

(11) **EP 4 718 932 A1**
(43) Date of publication of application: **01.04.2026**
(21) Application number: 24810290.7
(22) Date of filing: 16.05.2024
(51) Int. Cl.: H04W 72/231

(54) **METHOD AND DEVICE IN NODE FOR WIRELESS COMMUNICATION**

(30) Priority: 23.05.2023 CN 202310584816
(71) Applicant: Apogee Networks, LLC, Plano, TX 75024 (US)
(72) Inventor: LIU, Zheng, Shanghai 201206 (CN); ZHANG, Xiaobo, Shanghai 201206 (CN)
(74) Representative: Gunzelmann, Rainer
(86) International application number: PCT/CN2024/093601
(87) International publication number: WO 2024/240043

(57) **Abstract**

The present application discloses a method and device in a node for wireless communication. A node receives a first TDD uplink/downlink configuration and receives a first information block, wherein the first information block is used for determining at least one first-type symbol, and a downlink symbol indicated by the first TDD uplink/downlink configuration and overlapping the first-type symbol is used for uplink transmission; the node sends a first signal, wherein the first signal is used for carrying a first HARQ-ACK codebook, the first HARQ-ACK codebook depends on a target row index set, any one row index included in the target row index set belongs to a candidate row index set, the first row index is a row index included in the candidate row index set, at least one symbol included in a PDSCH time domain resource indicated by the first row index belongs to the first-type symbol, and the target row index set comprises at least one row index other than the first row index in the candidate row index set. The present application reduces signaling overhead.

## Description

### Technical Field

The present application relates to a transmission method and device in a wireless communication system, in particular to a transmission solution and device for a flexible transmission direction configuration in wireless communication.

### Background Art

Application scenarios of wireless communication systems will become more and more diversified in the future, and different application scenarios will put forward different performance requirements for the systems. In order to meet the different performance requirements of various application scenarios, the 3GPP (3rd Generation Partner Project) RAN (Radio Access Network) #72 plenary meeting decided to study the new radio (NR) technology (or 5G), and a WI (Work Item) of the new radio (NR) technology was passed at the 3GPP RAN #75 plenary meeting, and standardization work on the NR was started. At the 3GPP RAN #86 plenary meeting, it was decided to start work on an SI (Study Item) and a WI (Work Item) of NR Rel-17, and it is expected to initiate an SI and a WI of NR Rel-18 at the 3GPP RAN #94e plenary meeting.

In the new radio technology, an enhanced mobile broadband (eMBB), ultra-reliable and low-latency communications (URLLC), and massive machine type communications (mMTC) are three main application scenarios.

### Summary of the Invention

In an existing NR system, spectrum resources are statically divided into an FDD spectrum and a TDD spectrum. For the TDD spectrum, a base station and user equipment are both operated in a half-duplex mode. This half-duplex mode avoids a self-interference and can alleviate the impact of cross link interference, but it also brings about a decrease in resource utilization rate and an increase in latency. In view of these problems, supporting a flexible duplex mode on the TDD spectrum or the FDD spectrum has become a possible solution.

In view of a problem of supporting HARQ-ACK (hybrid automatic repeat request-acknowledgement) transmission of a PDSCH (physical downlink shared channel) in a flexible duplex mode, the present application discloses a solution. It should be noted that in the description of the present application, the flexible duplex mode is only used as a typical application scenario or example; and the present application is also applicable to other scenarios (for example, scenarios where link direction changes occur, or other scenarios supporting a multi-level configuration of transmission directions, or base stations or user equipment having stronger capabilities, such as scenarios supporting in-band full duplex, or different application scenarios, such as an eMBB and URLLC) facing similar problems, and may also achieve similar technical effects. In addition, the use of a unified solution for different scenarios (including but not limited to an eMBB and URLLC scenarios) also facilitates the reduction of hardware complexity and costs. In the absence of conflicts, embodiments and features in the embodiments in a first node device of the present application may be applied to a second node device, and vice versa. In particular, interpretations of terminologies, nouns, functions, and variables in the present application (if not otherwise specified) may refer to definitions in 3GPP specification protocol TS37 series and TS38 series.

The present application discloses a method in a first node for wireless communication, characterized by comprising:
receiving a first TDD uplink/downlink configuration and receiving a first information block, wherein the first information block is used for determining at least one first-type symbol, and a downlink symbol indicated by the first TDD uplink/downlink configuration and overlapping with the first-type symbol is used for uplink transmission; and
sending a first signal, the first signal being used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

As one embodiment, by excluding an HARQ-ACK bit corresponding to a PDSCH (physical downlink shared channel) overlapping with the first-type symbol from the first HARQ-ACK codebook, the generation of unnecessary HARQ-ACK bits is reduced, and the size of the HARQ-ACK codebook is decreased.

As one embodiment, whether at least one downlink symbol indicated through the first TDD uplink/downlink configuration belongs to the first-type symbol depends on the first information block, thereby supporting the generation of HARQ-ACK codebooks when SBFD is configured.

According to one aspect of the present application, the above method is characterized in that the first information block is used for determining a first subband, and the first subband comprises at least one resource block; and a symbol indicated as a downlink by the first TDD uplink/downlink configuration and overlapping with the first-type symbol is used for uplink transmission in the first subband.

According to one aspect of the present application, the above method is characterized in that a symbol indicated as a downlink by the first TDD uplink/downlink configuration and overlapping with the first-type symbol is used for downlink transmission in a second subband; and the second subband is not provided or the second subband is orthogonal to a downlink BWP.

According to one aspect of the present application, the above method is characterized in that the first information block is used for indicating at least one of the first-type symbols from a periodic time window, the periodic time window comprises a plurality of consecutive symbols, and a time length of the periodic time window is related to a length of a slot format configuration period.

According to one aspect of the present application, the above method is characterized by comprising:
sending a second information block,
wherein the second information block is used for indicating at least one capability parameter value of a sender of the second information block, and the at least one capability parameter value of the sender of the second information block is used for reporting at least one of the following two: support for a downlink symbol indicated by the first TDD uplink/downlink configuration and overlapping with the first-type symbol being used for uplink transmission and support for generation of the first HARQ-ACK codebook.

According to one aspect of the present application, the above method is characterized in that any one symbol included in a PDSCH time domain resource indicated by any one row index included in the target row index set is not indicated as an uplink by the first TDD uplink/downlink configuration.

According to one aspect of the present application, the above method is characterized in that the target row index set is used for determining a first candidate occasion set, and the first candidate occasion set comprises at least one candidate occasion; and the first HARQ-ACK codebook comprises an HARQ-ACK bit for a candidate occasion in the first candidate occasion set.

The present application discloses a method in a second node for wireless communication, characterized by comprising:
sending a first TDD uplink/downlink configuration and sending a first information block, wherein the first information block is used for determining at least one first-type symbol, and a downlink symbol indicated by the first TDD uplink/downlink configuration and overlapping with the first-type symbol is used for uplink transmission; and
receiving a first signal, the first signal being used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

According to one aspect of the present application, the above method is characterized in that the first information block is used for determining a first subband, and the first subband comprises at least one resource block; and a symbol indicated as a downlink by the first TDD uplink/downlink configuration and overlapping with the first-type symbol is used for uplink transmission in the first subband.

According to one aspect of the present application, the above method is characterized in that a symbol indicated as a downlink by the first TDD uplink/downlink configuration and overlapping with the first-type symbol is used for downlink transmission in a second subband; and the second subband is not provided or the second subband is orthogonal to a downlink BWP.

According to one aspect of the present application, the above method is characterized in that the first information block is used for indicating at least one of the first-type symbols from a periodic time window, the periodic time window comprises a plurality of consecutive symbols, and a time length of the periodic time window is related to a length of a slot format configuration period.

According to one aspect of the present application, the above method is characterized by comprising:
receiving a second information block,
wherein the second information block is used for indicating at least one capability parameter value of a sender of the second information block, and the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook.

According to one aspect of the present application, the above method is characterized in that any one symbol included in a PDSCH time domain resource indicated by any one row index included in the target row index set is not indicated as an uplink by the first TDD uplink/downlink configuration.

According to one aspect of the present application, the above method is characterized in that the target row index set is used for determining a first candidate occasion set, and the first candidate occasion set comprises at least one candidate occasion; and the first HARQ-ACK codebook comprises an HARQ-ACK bit for a candidate occasion in the first candidate occasion set.

The present application discloses a first node device for wireless communication, characterized by comprising:
a first receiver receiving a first TDD uplink/downlink configuration and receiving a first information block, wherein the first information block is used for determining at least one first-type symbol, and a downlink symbol indicated by the first TDD uplink/downlink configuration and overlapping with the first-type symbol is used for uplink transmission; and
a first transmitter sending a first signal, wherein the first signal is used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

The present application discloses a second node device for wireless communication, characterized by comprising:
a second transmitter sending a first TDD uplink/downlink configuration and sending a first information block, wherein the first information block is used for determining at least one first-type symbol, and a downlink symbol indicated by the first TDD uplink/downlink configuration and overlapping with the first-type symbol is used for uplink transmission; and
a second receiver receiving a first signal, wherein the first signal is used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

### Brief Description of the Drawings

Other features, purposes and advantages of the present application will become more apparent by reading the detailed description of the non-limiting embodiments with reference to the following drawings:
FIG. 1 shows a flowchart of a first TDD uplink/downlink configuration, a first information block, and a first signal according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first node device and a second node device according to one embodiment of the present application;
FIG. 5 shows a flowchart of wireless signal transmission according to one embodiment of the present application;
FIG. 6 shows a schematic diagram of a first subband according to one embodiment of the present application;
FIG. 7 shows a schematic diagram of a second subband according to one embodiment of the present application;
FIG. 8 shows a schematic diagram of a periodic time window according to one embodiment of the present application;
FIG. 9 shows a schematic diagram of a target row index set according to one embodiment of the present application;
FIG. 10 shows a schematic diagram of a first candidate occasion set according to one embodiment of the present application;
FIG. 11 shows a structural block diagram of a processing device in a first node device according to one embodiment of the present application; and
FIG. 12 shows a structural block diagram of a processing device in a second node device according to one embodiment of the present application.

### Detailed Description of Embodiments

The technical solution of the present application will be further described in detail below in conjunction with the drawings. It should be noted that, in the absence of conflicts, embodiments and features in the embodiments of the present application may be arbitrarily combined with each other.

### Embodiment 1

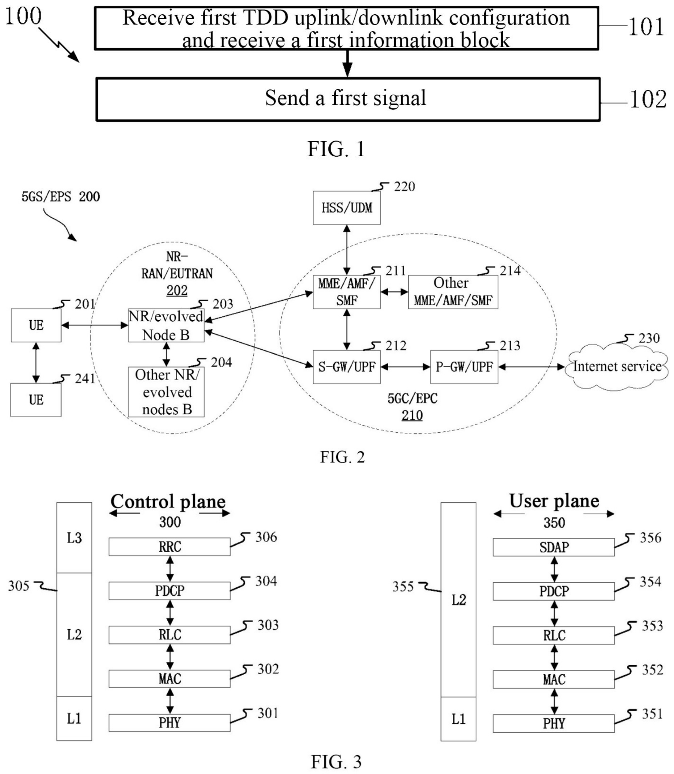

Embodiment 1 illustrates a flowchart 100 of a first TDD uplink/downlink configuration, a first information block, and a first signal according to one embodiment of the present application, as shown in FIG. 1. In FIG. 1, each block represents one step. It is particularly needed to emphasize that the order of various blocks in the figure does not limit a temporal order of the steps represented.

In Embodiment 1, a first node device in the present application receives the first TDD uplink/downlink configuration and receives the first information block in step 101, wherein the first information block is used for determining at least one first-type symbol, and a downlink symbol indicated by the first TDD uplink/downlink configuration and overlapping with the first-type symbol is used for uplink transmission; and the first node device in the present application sends the first signal in step 102, wherein the first signal is used for carrying a first HARQ-ACK codebook, wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

As one embodiment, the first information block is prior to the first TDD uplink/downlink configuration.

As one embodiment, the first information block is subsequent to the first TDD uplink/downlink configuration.

As one embodiment, the first information block is different from the first TDD uplink/downlink configuration.

As one embodiment, the first information block and the first TDD uplink/downlink configuration are transmitted through two different physical channels.

As one embodiment, the first information block and the first TDD uplink/downlink configuration belong to two different fields in the same IE (Information Element), respectively. As one dependent embodiment of the above embodiment, the first information block and the first TDD uplink/downlink configuration belong to the same IE, which ensures configuration consistency and simplifies a signaling design.

As one embodiment, the first information block and the first TDD uplink/downlink configuration belong to two different IEs, respectively. As one dependent embodiment of the above embodiment, the first information block and the first TDD uplink/downlink configuration belong to two different IEs, respectively, which improves configuration flexibility.

As one embodiment, the first information block and the first TDD uplink/downlink configuration belong to two different sub-IEs in the same RRC layer IE, respectively.

As one embodiment, a physical channel carrying the first information block and a physical channel carrying the first TDD uplink/downlink configuration occupy different time-frequency resources.

As one embodiment, the first TDD uplink/downlink configuration is configured through higher layer signaling or a higher layer parameter.

As one embodiment, the first TDD uplink/downlink configuration is configured through one or more IEs included in one piece of RRC (Radio Resource Control) layer signaling, or the first TDD uplink/downlink configuration is configured through one or more fields included in one piece of RRC layer signaling. As one dependent embodiment of the above embodiment, advantages of doing so are to facilitate the generation of Type-1 HARQ-ACK codebooks and ensure transmission of HARQ-ACKs.

As one embodiment, the first TDD uplink/downlink configuration is configured through part of or all fields included in an MIB (Master Information Block).

As one embodiment, the first TDD uplink/downlink configuration is configured through part of or all fields included in one SIB (System Information Block).

As one embodiment, the first TDD uplink/downlink configuration is configured through part of or all fields included in an SIB1 (System Information Block 1).

As one embodiment, the first TDD uplink/downlink configuration is UE specific or UE dedicated.

As one embodiment, a slot format configured (or indicated or provided) by the first TDD uplink/downlink configuration is bandwidth part (BWP) common.

As one embodiment, the slot format configured (or indicated or provided) by the first TDD uplink/downlink configuration is applicable across BWPs.

As one embodiment, the first TDD uplink/downlink configuration is cell common.

As one embodiment, the first TDD uplink/downlink configuration is cell specific.

As one embodiment, the first TDD uplink/downlink configuration is group common.

As one embodiment, the slot format configured (or indicated or provided) by the first TDD uplink/downlink configuration is applicable to an entire band occupied by a serving cell to which the first TDD uplink/downlink configuration belongs.

As one embodiment, the slot format configured (or indicated or provided) by the first TDD uplink/downlink configuration is applicable to an entire carrier to which the first TDD uplink/downlink configuration belongs.

As one embodiment, the first TDD uplink/downlink configuration comprises physical layer control information or physical layer control parameters.

As one embodiment, the first TDD uplink/downlink configuration is configured through part of or all fields in one DCI (Downlink Control Information) format. As one dependent embodiment of the above embodiment, advantages of doing so are to save bit header overhead of HARQ-ACKs.

As one embodiment, the first TDD uplink/downlink configuration is used for determining an uplink/downlink TDD configuration.

As one embodiment, the first TDD uplink/downlink configuration is used for determining a slot format.

As one embodiment, user equipment follows a slot format indicated by the first TDD uplink/downlink configuration.

As one embodiment, the first TDD uplink/downlink configuration indicates a slot format.

As one embodiment, user equipment determines a slot format through implementation according to the first TDD uplink/downlink configuration.

As one embodiment, user equipment determines a slot format in baseband processing according to the first TDD uplink/downlink configuration.

As one embodiment, the first TDD uplink/downlink configuration comprises part of or all fields in IE "tdd-UL-DL-ConfigCommon".

As one embodiment, the first TDD uplink/downlink configuration comprises part of or all fields in IE "tdd-UL-DL-ConfigDedicated".

As one embodiment, the first TDD uplink/downlink configuration is configured through part of or all fields in IE "ServingCellConfig".

As one embodiment, the first information block comprises a higher layer information or higher layer parameter configuration.

As one embodiment, the first information block comprises one or more IEs (Information Elements) included in one piece of RRC (Radio Resource Control) layer signaling, or the first information block comprises one or more fields included in one piece of RRC layer signaling.

As one embodiment, the first information block comprises part of or all fields included in one SIB.

As one embodiment, the first information block is cell common.

As one embodiment, the first information block is cell specific.

As one embodiment, the first information block is group common.

As one embodiment, the first information block is UE specific or UE dedicated.

As one embodiment, the first information block is configured per subband.

As one embodiment, the first information block is configured per bandwidth part (BWP).

As one embodiment, the first information block comprises part of or all fields in IE "SBFDConfigDedicated".

As one embodiment, the first information block comprises part of or all fields in IE "SBFDConfigCommon".

As one embodiment, the first information block comprises part of or all fields in IE "SBFDConfig".

As one embodiment, the first information block comprises part of or all fields in IE "ServingCellConfigCommon".

As one embodiment, the first information block comprises part of or all fields in IE "CellGroupConfig".

As one embodiment, the first information block comprises part of or all fields in IE "SpCellConfig".

As one embodiment, the first information block comprises part of or all fields in IE "SCellConfig".

As one embodiment, the first information block comprises part of or all fields in IE "ServingCellConfigCommonSIB".

As one embodiment, the first information block comprises part of or all fields in IE "ServingCellConfig".

As one embodiment, the first information block comprises part of or all fields in a DCI format 2_N, and N is one non-negative integer.

As one embodiment, the first information block comprises part of or all fields in a DCI format 2_8.

As one embodiment, the first information block comprises part of or all fields in one DCI format.

As one embodiment, the first information block is transmitted on a PDCCH.

As one embodiment, the first information block is used for configuring a slot or symbol of SBFD (subband full duplex).

As one embodiment, the first information block is used for configuring a slot or symbol supporting full duplex.

As one embodiment, the first-type symbol is an SBFD symbol.

As one embodiment, the first-type symbol is a time domain symbol to which SBFD is configured.

As one embodiment, the first-type symbol is a symbol in an SBFD slot.

As one embodiment, the first-type symbol is a symbol in a slot to which SBFD is configured.

As one embodiment, the first-type symbol is an OFDM symbol.

As one embodiment, whether one symbol belongs to the first-type symbol is configured.

As one embodiment, any one of the first-type symbols is an OFDM symbol.

As one embodiment, the first-type symbol is a time domain symbol to which a first subband in the present application is configured.

As one embodiment, the first-type symbol is a time domain symbol included in a slot to which the first subband in the present application is configured.

As one embodiment, the first-type symbol is a symbol to which SBFD indicated by the first information is applicable.

As one embodiment, the first-type symbol is a symbol indicated by the first information and supporting full duplex or flexible duplex.

As one embodiment, the first-type symbol is a symbol to which a subband indicated by the first information is applicable.

As one embodiment, the first-type symbol is a symbol included in the first information and corresponding to a bit with a bit value equal to "1" in a bitmap. As one dependent embodiment of the above embodiment, by indicating the first-type symbol through a bitmap, configuration flexibility is maximized.

As one embodiment, the first-type symbol is a symbol included in the first information and corresponding to a bit with a bit value equal to "0" in a bitmap. As one dependent embodiment of the above embodiment, by indicating the first-type symbol through a bitmap, configuration flexibility is maximized.

As one embodiment, the first-type symbol is a time domain symbol which causes a row index to be excluded.

As one embodiment, the first-type symbol is a symbol which can be simultaneously used for both uplink transmission and downlink transmission.

As one embodiment, the first-type symbol is a symbol which can be simultaneously used for both an uplink and a downlink by a base station or a network device.

As one embodiment, the first-type symbol is a time domain symbol indicated as a downlink by "tdd-UL-DL-ConfigCommon" and indicated (or provided) by the first information block.

As one embodiment, the first-type symbol is a time domain symbol indicated as a downlink by "tdd-UL-DL-ConfigCommon" and indicated as an SBFD symbol by the first information block.

As one embodiment, the first-type symbol is a time domain symbol indicated as a downlink or flexible by "tdd-UL-DL-ConfigCommon" and indicated (or provided) by the first information block.

As one embodiment, the first-type symbol is a time domain symbol indicated as a downlink or flexible by "tdd-UL-DL-ConfigCommon" and indicated as an SBFD symbol by the first information block.

As one embodiment, only "tdd-UL-DL-ConfigCommon" is considered, which simplifies a design and reduces standard workloads.

As one embodiment, the first-type symbol is a time domain symbol indicated as a downlink by "tdd-UL-DL-ConfigDedicated" and indicated (or provided) by the first information block.

As one embodiment, the first-type symbol is a time domain symbol indicated as a downlink by "tdd-UL-DL-ConfigDedicated" and indicated as an SBFD symbol by the first information block.

As one embodiment, the first-type symbol is a time domain symbol indicated as a downlink or flexible by "tdd-UL-DL-ConfigDedicated" and indicated (or provided) by the first information block.

As one embodiment, the first-type symbol is a time domain symbol indicated as a downlink or flexible by "tdd-UL-DL-ConfigDedicated" and indicated as an SBFD symbol by the first information block.

As one embodiment, the first-type symbol is a time domain symbol indicated as a downlink by "tdd-UL-DL-ConfigCommon" or "tdd-UL-DL-ConfigDedicated" and indicated (or provided) by the first information block.

As one embodiment, the first-type symbol is a time domain symbol indicated as a downlink by "tdd-UL-DL-ConfigCommon" or "tdd-UL-DL-ConfigDedicated" and indicated as an SBFD symbol by the first information block.

As one embodiment, the first-type symbol is a time domain symbol indicated as a downlink or flexible by "tdd-UL-DL-ConfigCommon" or "tdd-UL-DL-ConfigDedicated" and indicated (or provided) by the first information block.

As one embodiment, the first-type symbol is a time domain symbol indicated as a downlink or flexible by "tdd-UL-DL-ConfigCommon" or "tdd-UL-DL-ConfigDedicated" and indicated as an SBFD symbol by the first information block.

As one embodiment, both "tdd-UL-DL-ConfigCommon" and "tdd-UL-DL-ConfigDedicated" are considered, which maximizes use of an existing design and ensures compatibility.

As one embodiment, both a downlink symbol and a flexible symbol are considered, which expands configuration flexibility.

As one embodiment, only a downlink symbol is considered, which simplifies a system design.

As one embodiment, how to determine that at least one of the first-type symbols is implementation-related through the first information block is not defined by the standard.

As one embodiment, a method for determining at least one of the first-type symbols by the first information block may comprise one or more steps such as decoding, demodulation, baseband processing, and channel estimation.

As one embodiment, the technical feature of "the first information block is used for determining at least one first-type symbol" comprises the following meaning: the first information block is used for determining at least one of the first-type symbols by the first node device in the present application.

As one embodiment, the technical feature of "the first information block is used for determining at least one first-type symbol" comprises the following meaning: all or part included in the first information block are/is used for explicitly or implicitly indicating at least one of the first-type symbols.

As one embodiment, the technical feature of "the first information block is used for determining at least one first-type symbol" comprises the following meaning: the first information block is used for determining a plurality of the first-type symbols.

As one embodiment, the technical feature of "the first information block is used for determining at least one first-type symbol" comprises the following meaning: the first information block is used for determining only one of the first-type symbols.

As one embodiment, the technical feature of "the first information block is used for determining at least one first-type symbol" comprises the following meaning: the first information block is used for explicitly or implicitly indicating at least one of the first-type symbols from a downlink symbol indicated by "tdd-UL-DL-ConfigCommon".

As one embodiment, the technical feature of "the first information block is used for determining at least one first-type symbol" comprises the following meaning: the first information block is used for explicitly or implicitly indicating at least one of the first-type symbols from a downlink symbol or a flexible symbol indicated by "tdd-UL-DL-ConfigCommon".

As one embodiment, the technical feature of "the first information block is used for determining at least one first-type symbol" comprises the following meaning: the first information block is used for explicitly or implicitly indicating at least one of the first-type symbols from a downlink symbol indicated by "tdd-UL-DL-ConfigCommon" or "tdd-UL-DL-ConfigDedicated".

As one embodiment, the technical feature of "the first information block is used for determining at least one first-type symbol" comprises the following meaning: the first information block is used for explicitly or implicitly indicating at least one of the first-type symbols from a downlink symbol or a flexible symbol indicated by "tdd-UL-DL-ConfigCommon" or "tdd-UL-DL-ConfigDedicated".

As one embodiment, the technical feature of "the first information block is used for determining at least one first-type symbol" comprises the following meaning: the first information block comprises one bitmap, each bit in the bitmap corresponds to one symbol, and each of the first-type symbols is a symbol corresponding to a bit with a bit value equal to "1" in the bitmap. As one dependent embodiment of the above embodiment, the bitmap is periodically used. As one dependent embodiment of the above embodiment, the first information block is also used for indicating a period to which the bitmap is applied. As one dependent embodiment of the above embodiment, a symbol corresponding to each bit in the bitmap is a symbol based on a reference subcarrier spacing (SCS), and the reference subcarrier spacing is indicated by the first information block or is indicated by "tdd-UL-DL-ConfigCommon" or is predefined or is related to a frequency range (FR). As one dependent embodiment of the above embodiment, each bit in the bitmap corresponds to one downlink symbol indicated by "tdd-UL-DL-ConfigCommon" or "tdd-UL-DL-ConfigDedicated". As one dependent embodiment of the above embodiment, each bit in the bitmap corresponds to one downlink symbol or flexible symbol indicated by "tdd-UL-DL-ConfigCommon" or "tdd-UL-DL-ConfigDedicated".

As one embodiment, the technical feature of "the first information block is used for determining at least one first-type symbol" comprises the following meaning: the first information block comprises one bitmap, each bit in the bitmap corresponds to one symbol, and each of the first-type symbols is a symbol corresponding to a bit with a bit value equal to "0" in the bitmap. As one dependent embodiment of the above embodiment, the bitmap is periodically used. As one dependent embodiment of the above embodiment, the first information block is also used for indicating a period to which the bitmap is applied. As one dependent embodiment of the above embodiment, a symbol corresponding to each bit in the bitmap is a symbol based on the reference subcarrier spacing (SCS), and the reference subcarrier spacing is indicated by the first information block or is indicated by "tdd-UL-DL-ConfigCommon" or is predefined or is related to the frequency range (FR). As one dependent embodiment of the above embodiment, each bit in the bitmap corresponds to one downlink symbol indicated by "tdd-UL-DL-ConfigCommon" or "tdd-UL-DL-ConfigDedicated". As one dependent embodiment of the above embodiment, each bit in the bitmap corresponds to one downlink symbol or flexible symbol indicated by "tdd-UL-DL-ConfigCommon" or "tdd-UL-DL-ConfigDedicated".

As one embodiment, the technical feature of "the first information block is used for determining at least one first-type symbol" comprises the following meaning: the first information block is used for explicitly or implicitly indicating that at least one symbol is an SBFD symbol.

As one embodiment, the technical feature of "the first information block is used for determining at least one first-type symbol" comprises the following meaning: the first information block is used for explicitly or implicitly indicating that at least one symbol is a non-SBFD symbol, and other symbols are the first-type symbols. As one dependent embodiment of the above embodiment, indicating a non-SBFD symbol may reduce signaling overhead and increase configuration flexibility in specific scenarios.

As one embodiment, the technical feature of "the first information block is used for determining at least one first-type symbol" comprises the following meaning: the first information block is used for explicitly or implicitly indicating that at least one symbol is (or belongs to) the first-type symbol.

As one embodiment, the technical feature of "the first information block is used for determining at least one first-type symbol" comprises the following meaning: the first information block is used for explicitly or implicitly indicating at least one pattern, and a pattern indicated by "tdd-UL-DL-ConfigCommon" and a pattern indicated by the first information block are used together for determining at least one of the first-type symbols. As one dependent embodiment of the above embodiment, the first-type symbol is determined through comparison between patterns, which reuses an existing signaling design while ensuring configuration flexibility.

As one embodiment, the technical feature of "the first information block is used for determining at least one first-type symbol" comprises the following meaning: the first information block is used for explicitly or implicitly indicating at least one pattern, and a symbol determined as a downlink symbol by the pattern indicated by "tdd-UL-DL-ConfigCommon" and determined as an uplink symbol by the pattern indicated by the first information block is (or belongs to) the first-type symbol.

As one embodiment, the technical feature of "the first information block is used for determining at least one first-type symbol" comprises the following meaning: the first information block is used for explicitly or implicitly indicating at least one pattern, and a symbol determined as a downlink or flexible symbol by the pattern indicated by "tdd-UL-DL-ConfigCommon" and determined as an uplink symbol by the pattern indicated by the first information block is (or belongs to) the first-type symbol.

As one embodiment, the technical feature of "a downlink symbol indicated by the first TDD uplink/downlink configuration and overlapping with the first-type symbol is used for uplink transmission" comprises the following meaning: at least one downlink symbol indicated by the first TDD uplink/downlink configuration and overlapping with the first-type symbol can (or may or is allowed to or is configured to) be used for uplink transmission.

As one embodiment, the technical feature of "a downlink symbol indicated by the first TDD uplink/downlink configuration and overlapping with the first-type symbol is used for uplink transmission" comprises the following meaning: when one downlink symbol indicated by the first TDD uplink/downlink configuration belongs to the first-type symbol or overlaps with at least one of the first-type symbols, the one downlink symbol indicated by the first TDD uplink/downlink configuration can (or may or is allowed to or is configured to) be used for uplink transmission.

As one embodiment, the technical feature of "a downlink symbol indicated by the first TDD uplink/downlink configuration and overlapping with the first-type symbol is used for uplink transmission" comprises the following meaning: the first-type symbol comprises a symbol both indicated as a downlink symbol by the first TDD uplink/downlink configuration and indicated as an SBFD symbol by the first information block.

As one embodiment, the technical feature of "a downlink symbol indicated by the first TDD uplink/downlink configuration and overlapping with the first-type symbol is used for uplink transmission" comprises the following meaning: the first-type symbol comprises a symbol both indicated as a downlink symbol by the first TDD uplink/downlink configuration and indicated as an uplink symbol by the first information block.

As one embodiment, the technical feature of "a downlink symbol indicated by the first TDD uplink/downlink configuration and overlapping with the first-type symbol is used for uplink transmission" comprises the following meaning: a symbol indicated as a downlink by the first TDD uplink/downlink configuration and simultaneously indicated by the first information block can (or may or is allowed to or is configured to) be used for uplink transmission.

As one embodiment, the technical feature of "a downlink symbol indicated by the first TDD uplink/downlink configuration and overlapping with the first-type symbol is used for uplink transmission" comprises the following meaning: a symbol indicated as a downlink by the first TDD uplink/downlink configuration and simultaneously indicated as the first-type symbol by the first information block can (or may or is allowed to or be configured to) be used for uplink transmission.

As one embodiment, the technical feature of "a downlink symbol indicated by the first TDD uplink/downlink configuration and overlapping with the first-type symbol is used for uplink transmission" comprises the following meaning: a symbol indicated as a downlink by the first TDD uplink/downlink configuration and simultaneously overlapping with at least one of the first-type symbols indicated by the first information block can (or may or is allowed to or be configured to) be used for uplink transmission.

As one embodiment, the technical feature of "a downlink symbol indicated by the first TDD uplink/downlink configuration and overlapping with the first-type symbol is used for uplink transmission" comprises the following meaning: user equipment considers that at least one downlink symbol indicated by the first TDD uplink/downlink configuration and overlapping with the first-type symbol is available for transmission.

As one embodiment, the technical feature of "a downlink symbol indicated by the first TDD uplink/downlink configuration and overlapping with the first-type symbol is used for uplink transmission" comprises the following meaning: user equipment considers that at least one symbol overlapping with the first-type symbol and indicated as a downlink by the first TDD uplink/downlink configuration is available for transmission.

As one embodiment, the technical feature of "a downlink symbol indicated by the first TDD uplink/downlink configuration and overlapping with the first-type symbol is used for uplink transmission" comprises the following meaning: user equipment considers that at least one symbol overlapping with the first-type symbol and indicated as a downlink by the first TDD uplink/downlink configuration is available for transmission in one subband.

As one embodiment, the technical feature of "a downlink symbol indicated by the first TDD uplink/downlink configuration and overlapping with the first-type symbol is used for uplink transmission" comprises the following meaning: If a DCI format or an RAR (random access response) UL grant or a fallback RAR UL grant or a success RAR is received, in at least one symbol overlapping with the first-type symbol and indicated as a downlink by the first TDD uplink/downlink configuration, user equipment sends a PUSCH (physical uplink shared channel), a PUCCH (physical uplink control channel), a PRACH (physical random access channel), or an SRS (sounding reference signal) correspondingly.

As one embodiment, the technical feature of "a downlink symbol indicated by the first TDD uplink/downlink configuration and overlapping with the first-type symbol is used for uplink transmission" comprises the following meaning: if a DCI format or an RAR UL grant or a fallback RAR UL grant or a success RAR is received, in at least one symbol overlapping with the first-type symbol and indicated as a downlink by the first TDD uplink/downlink configuration and in one subband (or RB set), user equipment sends a PUSCH, a PUCCH, a PRACH, or an SRS correspondingly.

As one embodiment, the technical feature of "a downlink symbol indicated by the first TDD uplink/downlink configuration and overlapping with the first-type symbol is used for uplink transmission" comprises the following meaning: if a DCI format or an RAR UL grant or a fallback RAR UL grant or a success RAR is received, in at least one symbol overlapping with the first-type symbol and indicated as a downlink by the first TDD uplink/downlink configuration and in one subband (or RB set), user equipment sends a PUSCH, a PUCCH, or an SRS correspondingly.

As one embodiment, the technical feature of "a downlink symbol indicated by the first TDD uplink/downlink configuration and overlapping with the first-type symbol is used for uplink transmission" comprises the following meaning: if a DCI format is received, in at least one symbol overlapping with the first-type symbol and indicated as a downlink by the first TDD uplink/downlink configuration and in one subband (or RB set), user equipment sends a PUSCH, a PUCCH, a PRACH, or an SRS correspondingly.

As one embodiment, the technical feature of "a downlink symbol indicated by the first TDD uplink/downlink configuration and overlapping with the first-type symbol is used for uplink transmission" comprises the following meaning: if a DCI format is received, in at least one symbol overlapping with the first-type symbol and indicated as a downlink by the first TDD uplink/downlink configuration, user equipment sends a PUSCH, a PUCCH, a PRACH, or an SRS correspondingly.

As one embodiment, the technical feature of "a downlink symbol indicated by the first TDD uplink/downlink configuration and overlapping with the first-type symbol is used for uplink transmission" comprises the following meaning: if a DCI format is received, in at least one symbol overlapping with the first-type symbol and indicated as a downlink by the first TDD uplink/downlink configuration, user equipment sends a PUSCH, a PUCCH, or an SRS correspondingly.

As one embodiment, PRACH transmission is supported in the first-type symbol, which may improve a random access capacity and coverage of a random access channel.

As one embodiment, PRACH transmission is not supported in the first-type symbol, which may reduce the impact on existing systems, reuse an existing design, and reduce standardization work.

As one embodiment, the technical feature of "a downlink symbol indicated by the first TDD uplink/downlink configuration and overlapping with the first-type symbol is used for uplink transmission" comprises the following meaning: the downlink symbol indicated by the first TDD uplink/downlink configuration and overlapping with the first-type symbol is used for uplink transmission in the first subband in the present application.

As one embodiment, the downlink symbol indicated by the first TDD uplink/downlink configuration and overlapping with the first-type symbol is a symbol completely overlapping with at least one of the first-type symbols and indicated as a downlink by the first TDD uplink/downlink configuration.

As one embodiment, the downlink symbol indicated by the first TDD uplink/downlink configuration and overlapping with the first-type symbol is a symbol completely or partially overlapping with one of the first-type symbols and indicated as a downlink by the first TDD uplink/downlink configuration.

As one embodiment, the downlink symbol indicated by the first TDD uplink/downlink configuration and overlapping with the first-type symbol is a symbol completely or partially overlapping with at least one of the first-type symbols in a time domain and indicated as a downlink by the first TDD uplink/downlink configuration.

As one embodiment, the downlink symbol indicated by the first TDD uplink/downlink configuration and overlapping with the first-type symbol is a symbol completely included in at least one of the first-type symbols in the time domain and indicated as a downlink by the first TDD uplink/downlink configuration.

As one embodiment, the downlink symbol indicated by the first TDD uplink/downlink configuration and overlapping with the first-type symbol is at least one symbol included in one of the first-type symbols in the time domain and indicated as a downlink by the first TDD uplink/downlink configuration for a given subcarrier spacing. As one dependent embodiment of the above embodiment, different subcarrier spacings are considered, which improves flexibility and compatibility of a system configuration.

As one embodiment, the first signal is a baseband signal or a radio frequency signal.

As one embodiment, the first signal is transmitted through an air interface or a wireless interface.

As one embodiment, the first signal is a PUCCH (Physical Uplink Control Channel) or a PUSCH (Physical Uplink Shared Channel).

As one embodiment, the first signal is a CG (Configured Grant) PUSCH.

As one embodiment, the first signal comprises a PUSCH and a DMRS (Demodulation Reference Signal).

As one embodiment, the first signal comprises a PUCCH and a DMRS.

As one embodiment, the first signal occupies at least one of the first-type symbols in the time domain.

As one embodiment, the first signal completely or partially overlaps with at least one of the first-type symbols in the time domain. As one dependent embodiment of the above embodiment, overlapping between the first signal and the first-type symbol in the time domain is allowed, which increases a capacity and flexibility.

As one embodiment, the first signal occupies only a symbol other than the first-type symbol in the time domain.

As one embodiment, the first signal does not have overlapping resources with any one of the first-type symbols in the time domain. As one dependent embodiment of the above embodiment, overlapping between the first signal and the first-type symbol in the time domain is not allowed, which ensures performance of the first signal while reducing complexity.

As one embodiment, the first HARQ-ACK codebook is a Type-1 HARQ-ACK codebook.

As one embodiment, the first HARQ-ACK codebook comprises at least one HARQ-ACK bit.

As one embodiment, the first HARQ-ACK codebook comprises at least one HARQ-ACK information bit.

As one embodiment, the first HARQ-ACK codebook comprises at least one HARQ-ACK bit before coding.

As one embodiment, the first HARQ-ACK codebook comprises a padding bit.

As one embodiment, the first HARQ-ACK codebook does not comprise a padding bit.

As one embodiment, the first HARQ-ACK codebook comprises a plurality of sub-codebooks.

As one embodiment, the first HARQ-ACK codebook comprises only one sub-codebook.

As one embodiment, the technical feature of "the first signal is used for carrying a first HARQ-ACK codebook" comprises the following meaning: the first signal is used for carrying the first HARQ-ACK codebook by the first node device in the present application.

As one embodiment, the technical feature of "the first signal is used for carrying a first HARQ-ACK codebook" comprises the following meaning: the first HARQ-ACK codebook is transmitted on the first signal.

As one embodiment, the technical feature of "the first signal is used for carrying a first HARQ-ACK codebook" comprises the following meaning: any one bit included in the first HARQ-ACK codebook is an information bit transmitted on the first signal.

As one embodiment, the technical feature of "the first signal is used for carrying a first HARQ-ACK codebook" comprises the following meaning: bits in the first HARQ-ACK codebook are mapped (or multiplexed) onto the first signal.

As one embodiment, the technical feature of "the first signal is used for carrying a first HARQ-ACK codebook" comprises the following meaning: the first HARQ-ACK codebook is used for generating the first signal.

As one embodiment, the technical feature of "the first signal is used for carrying a first HARQ-ACK codebook" comprises the following meaning: the first HARQ-ACK codebook is used for generating UCI (uplink control information) bits carried by the first signal.

As one embodiment, the first signal carries all bits in the first HARQ-ACK codebook.

As one embodiment, the first signal carries part of bits in the first HARQ-ACK codebook.

As one embodiment, the technical feature of "the first signal is used for carrying a first HARQ-ACK codebook" comprises the following meaning: UCI bits comprising bits in the first HARQ-ACK codebook are used for generating the first signal.

As one embodiment, the candidate row index set comprises a plurality of row indexes.

As one embodiment, the candidate row index set comprises only one row index.

As one embodiment, any one row index in the candidate row index set corresponds to one row in a table or list.

As one embodiment, the number of row indexes included in the candidate row index set is not greater than 16.

As one embodiment, the number of row indexes included in the candidate row index set is equal to 16.

As one embodiment, any one row index included in the candidate row index set is a non-negative integer.

As one embodiment, any one row index included in the candidate row index set is a positive integer.

As one embodiment, any one row index included in the candidate row index set is a positive integer not greater than 16.

As one embodiment, any one row index included in the candidate row index set is an index of one row in one table or list.

As one embodiment, any one row index included in the candidate row index set is an index of one row in one predefined or configured table or one predefined or configured list.

As one embodiment, the candidate row index set comprises indexes of all rows in one predefined or configured table or one predefined or configured list.

As one embodiment, any one row index included in the candidate row index set is an index of one row in a PDSCH resource assignment table.

As one embodiment, the candidate row index set comprises indexes of all rows in the PDSCH resource assignment table.

As one embodiment, any one row index included in the candidate row index set is an index of one row in a table or list that defines PDSCH time domain resource assignment.

As one embodiment, the candidate row index set comprises indexes of all rows in a table or list that defines PDSCH time domain resource assignment.

As one embodiment, any one row index included in the candidate row index set is an index of one row in a table corresponding to a default PDSCH time domain resource assignment A, B or C or an index of one entry in a PDSCH time domain assignment list configured by high layer signaling.

As one embodiment, the candidate row index set comprises indexes of all rows in a table corresponding to the default PDSCH time domain resource assignment A, B or C or indexes of all entries in the PDSCH time domain assignment list configured by high layer signaling.

As one embodiment, any one row index included in the candidate row index set is an index of one row in a table corresponding to a default PDSCH time domain resource assignment A or an index of one entry in the PDSCH time domain assignment list configured by high layer signaling.

As one embodiment, the candidate row index set comprises indexes of all rows in a table corresponding to the default PDSCH time domain resource assignment A or indexes of all entries in the PDSCH time domain assignment list configured by high layer signaling.

As one embodiment, a row indexed by any one row index included in the candidate row index set defines a slot offset value and a start and length indicator value (SLIV).

As one embodiment, any one row index included in the candidate row index set is one index value which can be provided by a time domain resource assignment field in a DCI format.

As one embodiment, any one row index included in the candidate row index set is one candidate value of the time domain resource assignment field in the DCI format.

As one embodiment, the target row index set is one subset of the candidate row index set.

As one embodiment, the technical feature of "any one row index included in the candidate row index set is used for indicating one PDSCH time domain resource" comprises the following meaning: any one row index included in the candidate row index set is used for indicating one PDSCH time domain resource by a second node device in the present application.

As one embodiment, the technical feature of "any one row index included in the candidate row index set is used for indicating one PDSCH time domain resource" comprises the following meaning: any one row index included in the candidate row index set is used for explicitly or implicitly indicating one PDSCH time domain resource.

As one embodiment, the technical feature of "any one row index included in the candidate row index set is used for indicating one PDSCH time domain resource" comprises the following meaning: a row indexed by any one row index included in the candidate row index set defines a slot offset value and a start and length indicator value of a PDSCH.

As one embodiment, the technical feature of "any one row index included in the candidate row index set is used for indicating one PDSCH time domain resource" comprises the following meaning: a row indexed by any one row index included in the candidate row index set defines a start symbol and an assignment length of a PDSCH and a mapping type of the PDSCH.

As one embodiment, the technical feature of "any one row index included in the candidate row index set is used for indicating one PDSCH time domain resource" comprises the following meaning: a row indexed by any one row index included in the candidate row index set is used for determining a slot of a PDSCH and a symbol occupied by the PDSCH within the slot.

As one embodiment, the technical feature of "any one row index included in the candidate row index set is used for indicating one PDSCH time domain resource" comprises the following meaning: a row indexed by any one row index included in the candidate row index set defines a DMRS (demodulation reference signal) position of a PDSCH, a mapping type of the PDSCH, a slot offset value of the PDSCH, a start symbol, and an assignment length.

As one embodiment, the technical feature of "any one row index included in the candidate row index set is used for indicating one PDSCH time domain resource" comprises the following meaning: any one row index included in the candidate row index set is used for indicating a slot and a symbol occupied by one PDSCH in a time domain.

As one embodiment, the technical feature of "the first HARQ-ACK codebook depends on a target row index set" comprises the following meaning: a row index included in the target row index set is used for determining or generating the first HARQ-ACK codebook.

As one embodiment, the technical feature of "the first HARQ-ACK codebook depends on a target row index set" comprises the following meaning: at least one HARQ-ACK bit included in the first HARQ-ACK codebook is for the target row index set.

As one embodiment, the technical feature of "the first HARQ-ACK codebook depends on a target row index set" comprises the following meaning: the first HARQ-ACK codebook comprises HARQ-ACK bits for a PDSCH occasion indicated by a row index in the target row index set.

As one embodiment, the technical feature of "the first HARQ-ACK codebook depends on a target row index set" comprises the following meaning: the first HARQ-ACK codebook comprises HARQ-ACK bits for a PDSCH candidate occasion indicated by a row indexed by a row index in the target row index set.

As one embodiment, the technical feature of "the first HARQ-ACK codebook depends on a target row index set" comprises the following meaning: determination of the first HARQ-ACK codebook is based on the candidate row index set.

As one embodiment, the technical feature of "the first HARQ-ACK codebook depends on a target row index set" comprises the following meaning: the target row index set is used for determining one occasion set, and the occasion set determined by the target row index set is used for determining or generating the first HARQ-ACK codebook. As one dependent embodiment of the above embodiment, the occasion set comprises occasions for candidate PDSCH reception, semi-persistent scheduling PDSCH release, or TCI (transmission configuration indicator) status update. As one dependent embodiment of the above embodiment, the first HARQ-ACK codebook comprises an HARQ-ACK bit for each occasion in the occasion set. As one dependent embodiment of the above embodiment, an arrangement order of HARQ-ACK bits included in the first HARQ-ACK codebook is according to an arrangement order of occasions in the occasion set. As one dependent embodiment of the above embodiment, the occasion set is for one serving cell.

As one embodiment, the first row index may be any one row index included in the candidate row index set.

As one embodiment, the first row index may be one given row index included in the candidate row index set.

As one embodiment, the technical feature of "at least one symbol included in a PDSCH time domain resource indicated by the first row index belongs to the first-type symbol" comprises the following meaning: at least one symbol included in the PDSCH time domain resource indicated by the first row index is the first-type symbol.

As one embodiment, the technical feature of "at least one symbol included in a PDSCH time domain resource indicated by the first row index belongs to the first-type symbol" comprises the following meaning: at least one symbol included in the PDSCH time domain resource indicated by the first row index completely or partially overlaps with the first-type symbol in a time domain.

As one embodiment, the technical feature of "at least one symbol included in a PDSCH time domain resource indicated by the first row index belongs to the first-type symbol" comprises the following meaning: the PDSCH time domain resource indicated by the first row index overlaps with at least one of the first-type symbols in a time domain.

As one embodiment, the technical feature of "at least one symbol included in a PDSCH time domain resource indicated by the first row index belongs to the first-type symbol" comprises the following meaning: a time domain resource indicated by a row indexed by the first row index overlaps with at least one of the first-type symbols in a time domain.

As one embodiment, the technical feature of "at least one symbol included in a PDSCH time domain resource indicated by the first row index belongs to the first-type symbol" comprises the following meaning: an occasion indicated by a row indexed by the first row index overlaps with at least one of the first-type symbols in a time domain.

As one embodiment, the technical feature of "at least one symbol included in a PDSCH time domain resource indicated by the first row index belongs to the first-type symbol" comprises the following meaning: at least one symbol included in the PDSCH time domain resource indicated by the first row index is indicated as the first-type symbol by the first information block.

As one embodiment, the target row index set does not comprise the first row index.

As one embodiment, the target row index set is a row index set obtained by removing at least the first row index from the candidate row index set.

As one embodiment, the target row index set is composed of row indexes obtained by removing at least the first row index from the candidate row index set.

As one embodiment, the target row index set excludes the first row index.

As one embodiment, the target row index set is composed of row indexes of the candidate row index set after removing one or more row indexes comprising the first row index.

### Embodiment 2

Embodiment 2 illustrates a schematic diagram of one network architecture according to the present application, as shown in FIG. 2. FIG. 2 illustrates a diagram of a network architecture 200 of a 5G NR, LTE (Long-Term Evolution) and LTE-A (Long-Term Evolution Advanced) systems. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, NG-RAN (Next Generation Radio Access Network) 202, 5GC (5G Core Network)/EPC (Evolved Packet Core) 210, an HSS (Home Subscriber Server)/UDM (Unified Data Management) 220 and an Internet service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The NG-RAN comprises an NR/Evolved Node B (gNB/eNB) 203 and other gNBs (eNBs) 204. The gNB (eNB) 203 provides user and control plane protocol termination towards the UE201. The gNB (eNB) 203 may be connected to the other gNBs (eNBs) 204 via an Xn/X2 interface (e.g., backhaul). The gNB (eNB) 203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB (eNB) 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia device, a video device, a digital audio player (e.g., an MP3 player), a camera, a game console, a drone, an aircraft, a narrowband Internet of Things device, a machine type communication device, a land vehicle, an automobile, a wearable device, test equipment, a test instrument, a test tool, or any other similarly functional device. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies. The gNB (eNB) 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an Intranet, an IMS (IP Multimedia Subsystem) and packet switching streaming services.

As one embodiment, the UE201 corresponds to a first node device in the present application.

As one embodiment, the UE201 supports transmission in a flexible duplex mode.

As one embodiment, the gNB (eNB) 201 corresponds to a second node device in the present application.

As one embodiment, the gNB (eNB) 201 supports transmission in a flexible duplex mode.

### Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture of the control plane 300 for a first node device (UE or a gNB) and a second node device (a gNB or UE) using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and is responsible for a link between the first node device and the second node device through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second node device. The PDCP sublayer 304 provides multiplexing between different radio bearers and logical channels. The PDCP sublayer 304 also provides security by encrypting data packets, and provides handover support on the first node device between the second node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., an IP layer) terminating at a P-GW on a network side and an application layer terminating at another end (e.g., remote UE, a server, etc.) of a connection.

As one embodiment, the wireless protocol architecture in FIG. 3 is applicable to the first node device in the present application.

As one embodiment, the wireless protocol architecture in FIG. 3 is applicable to the second node device in the present application.

As one embodiment, a first TDD uplink/downlink configuration in the present application is generated at an RRC306, a MAC302, a MAC352, the PHY301, or a PHY351.

As one embodiment, a first information block in the present application is generated at the RRC306, the MAC302, the MAC352, the PHY301, or the PHY351.

As one embodiment, a first signal in the present application is generated at the RRC306, the MAC302, the MAC352, the PHY301, or the PHY351.

As one embodiment, a second information block in the present application is generated at the RRC306, the MAC302, the MAC352, the PHY301, or the PHY351.

### Embodiment 4

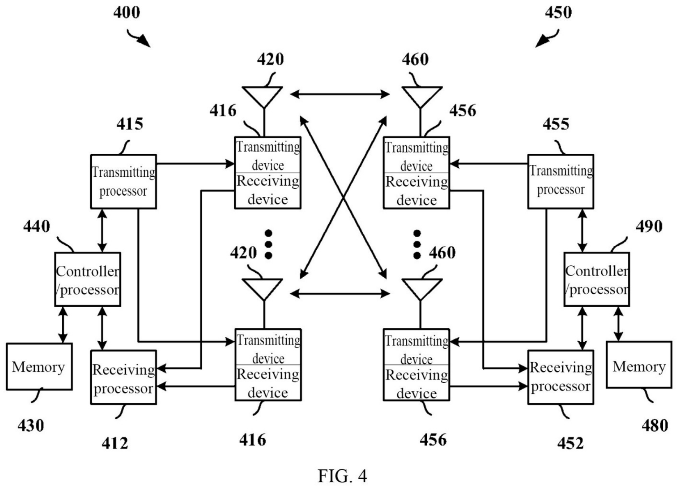

Embodiment 4 shows a schematic diagram of a first node device and a second node device according to one embodiment of the present application, as shown in FIG. 4.

The first node device (450) may comprise a controller/processor 490, a data source/buffer 480, a receiving processor 452, a transmitting device/receiving device 456, and a transmitting processor 455, and the transmitting device/receiving device 456 comprises an antenna 460.

The second node device (410) may comprise a controller/processor 440, a data source/buffer 430, a receiving processor 412, a transmitting device/receiving device 416, and a transmitting processor 415, and the transmitting device/receiving device 416 comprises an antenna 420.

In a DL (Downlink), upper-layer packets are provided to the controller/processor 440. The controller/processor 440 implements functions of an L2 layer and above. In the DL, the controller/processor 440 provides packet header compression, encryption, packet segmentation and reordering, multiplexing between logical and transport channels, and radio resource assignment to the first node device 450 based on various priority metrics. The controller/processor 440 is also responsible for an HARQ operation and retransmission of a lost packet, and for high layer signaling to the first node device 450. A first TDD uplink/downlink configuration in the present application and high layer information carried by a first information block are generated at the controller/processor 440. The transmitting processor 415 implements various signal processing functions for an L1 layer (i.e., a physical layer), comprising coding, interleaving, scrambling, modulation, power control/assignment, precoding, physical layer control signaling generation, etc., for example, the generation of a physical layer signal carrying the first TDD uplink/downlink configuration and a physical layer signal carrying the first information block is completed in the transmitting processor 415. Generated modulation symbols are divided into parallel streams, and each stream is mapped to a corresponding multi-carrier subcarrier and/or multi-carrier symbol, which is then mapped to the antenna 420 by the transmitting processor 415 via the transmitting device 416 to be transmitted in a radio frequency signal form. At a receiving end, each receiving device 456 receives a radio frequency signal through its corresponding antenna 460, and each receiving device 456 recovers baseband information modulated onto a radio frequency carrier and provides the baseband information to the receiving processor 452. The receiving processor 452 implements various signal reception processing functions of the L1 layer. The signal receiving processing functions comprise demodulating a physical layer signal carrying the first TDD uplink/downlink configuration in the present application and a physical layer signal carrying the first information block in the present application based on various modulation schemes (for example, binary phase shift keying (BPSK), and quadrature phase shift keying (QPSK)) through multi-carrier symbols in a multi-carrier symbol stream, then descrambling, decoding and deinterleaving to recover data or control transmitted by the second node device 410 on the physical channel, and then providing the data and control signals to the controller/processor 490. The controller/processor 490 is responsible for the L2 layer and above, and the controller/processor 490 interprets the high layer information, comprising interpreting the first TDD uplink/downlink configuration and high layer information carried by the first information block. The controller/processor may be associated with the memory 480 storing a program code and data. The memory 480 may be referred to as a computer-readable medium.

In uplink (UL) transmission, similar to downlink transmission, high layer information, comprising high layer information carried by a first signal in the present application (when the first signal carries the high layer information) and a second information block, is generated at the controller/processor 490 and then is implemented by the transmitting processor 455 for various signal transmission processing functions for the L1 layer (i.e., a physical layer), and a physical layer signal of the first signal and a physical layer signal carrying the second information block are mapped to the antenna 460 by the transmitting processor 455 via the transmitting device 456 and is transmitted in a radio frequency signal form. The receiving device 416 receives a radio frequency signal through its corresponding antenna 420, and each receiving device 416 recovers baseband information modulated on a radio frequency carrier and provides the baseband information to the receiving processor 412. The receiving processor 412 implements various signal receiving processing functions for the L1 layer (i.e., the physical layer), comprising receiving and processing a physical layer signal carrying the first signal and a physical layer signal carrying the second information block in the present application, and then providing data and/or control signals to the controller/processor 440. The functions of the L2 layer implemented at the controller/processor 440 comprise interpreting high layer information such as high layer information carried by the first signal in the present application (when the first signal carries the high layer information) and the second information block. The controller/processor may be associated with the buffer 430 storing a program code and data. The buffer 430 may be a computer-readable medium.

As one embodiment, the first node device 450 device comprises: at least one processor and at least one memory, the at least one memory comprising a computer program code, and the at least one memory and the computer program code being configured to be used together with the at least one processor; and the first node device 450 device at least: receives the first TDD uplink/downlink configuration and receives the first information block, wherein the first information block is used for determining at least one first-type symbols, and a downlink symbol indicated by the first TDD uplink/downlink configuration and overlapping with the first-type symbol is used for uplink transmission; and sends the first signal, the first signal being used for carrying a first HARQ-ACK codebook, wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

As one embodiment, the first node device 450 comprises: a memory that stores a computer readable instruction program, the computer readable instruction program generating actions when executed by at least one processor, the actions comprising: receiving the first TDD uplink/downlink configuration and receiving the first information block, wherein the first information block is used for determining at least one first-type symbol, and the downlink symbol indicated by the first TDD uplink/downlink configuration and overlapping with the first-type symbol is used for uplink transmission; and sending the first signal, the first signal being used for carrying the first HARQ-ACK codebook, wherein the first HARQ-ACK codebook depends on the target row index set, the target row index set comprises at least one row index, any one row index included in the target row index set belongs to the candidate row index set, and any one row index included in the candidate row index set is used for indicating one PDSCH time domain resource; and the first row index is one row index included in the candidate row index set, at least one symbol included in the PDSCH time domain resource indicated by the first row index belongs to the first-type symbol, and the target row index set comprises at least one row index other than the first row index in the candidate row index set.

As one embodiment, the second node device 410 device comprises: at least one processor and at least one memory, the at least one memory comprising a computer program code, and the at least one memory and the computer program code being configured to be used together with the at least one processor. The second node device 410 device at least: sends the first TDD uplink/downlink configuration and sends the first information block, wherein the first information block is used for determining at least one first-type symbol, and the downlink symbol indicated by the first TDD uplink/downlink configuration and overlapping with the first-type symbol is used for uplink transmission; and receives the first signal, the first signal being used for carrying the first HARQ-ACK codebook, wherein the first HARQ-ACK codebook depends on the target row index set, the target row index set comprises at least one row index, any one row index included in the target row index set belongs to the candidate row index set, and any one row index included in the candidate row index set is used for indicating one PDSCH time domain resource; and the first row index is one row index included in the candidate row index set, at least one symbol included in the PDSCH time domain resource indicated by the first row index belongs to the first-type symbol, and the target row index set comprises at least one row index other than the first row index in the candidate row index set.

As one embodiment, the second node device 410 comprises: a memory that stores a computer readable instruction program, the computer readable instruction program generating actions when executed by at least one processor, the actions comprising: sending the first TDD uplink/downlink configuration and sending the first information block, wherein the first information block is used for determining at least one first-type symbol, and the downlink symbol indicated by the first TDD uplink/downlink configuration and overlapping with the first-type symbol is used for uplink transmission; and receiving the first signal, the first signal being used for carrying the first HARQ-ACK codebook, wherein the first HARQ-ACK codebook depends on the target row index set, the target row index set comprises at least one row index, any one row index included in the target row index set belongs to the candidate row index set, and any one row index included in the candidate row index set is used for indicating one PDSCH time domain resource; and the first row index is one row index included in the candidate row index set, at least one symbol included in the PDSCH time domain resource indicated by the first row index belongs to the first-type symbol, and the target row index set comprises at least one row index other than the first row index in the candidate row index set.

As one embodiment, the first node device 450 is one piece of user equipment (UE).

As one embodiment, the first node device 450 is user equipment supporting transmission in a flexible duplex mode.

As one embodiment, the second node device 410 is one base station device (gNB/eNB).

As one embodiment, the second node device 410 is one base station device supporting transmission in a flexible duplex mode.

As one embodiment, the receiving device 456 (comprising the antenna 460), the receiving processor 452, and the controller/processor 490 are used for receiving the first TDD uplink/downlink configuration in the present application.

As one embodiment, the receiving device 456 (comprising the antenna 460), the receiving processor 452, and the controller/processor 490 are used for receiving the first information block in the present application.

As one embodiment, the transmitting device 456 (comprising the antenna 460), the transmitting processor 455, and the controller/processor 490 are used for sending the first signal in the present application.

As one embodiment, the transmitting device 456 (comprising the antenna 460), the transmitting processor 455, and the controller/processor 490 are used for sending the second information block in the present application.

As one embodiment, the transmitting device 416 (comprising the antenna 420), the transmitting processor 415, and the controller/processor 440 are used for sending the first TDD uplink/downlink configuration in the present application.

As one embodiment, the transmitting device 416 (comprising the antenna 420), the transmitting processor 415, and the controller/processor 440 are used for sending the first information block in the present application.

As one embodiment, the receiving device 416 (comprising the antenna 420), the receiving processor 412, and the controller/processor 440 are used for receiving the first signal in the present application.

As one embodiment, the receiving device 416 (comprising the antenna 420), the receiving processor 412, and the controller/processor 440 are used for receiving the second information block in the present application.

### Embodiment 5

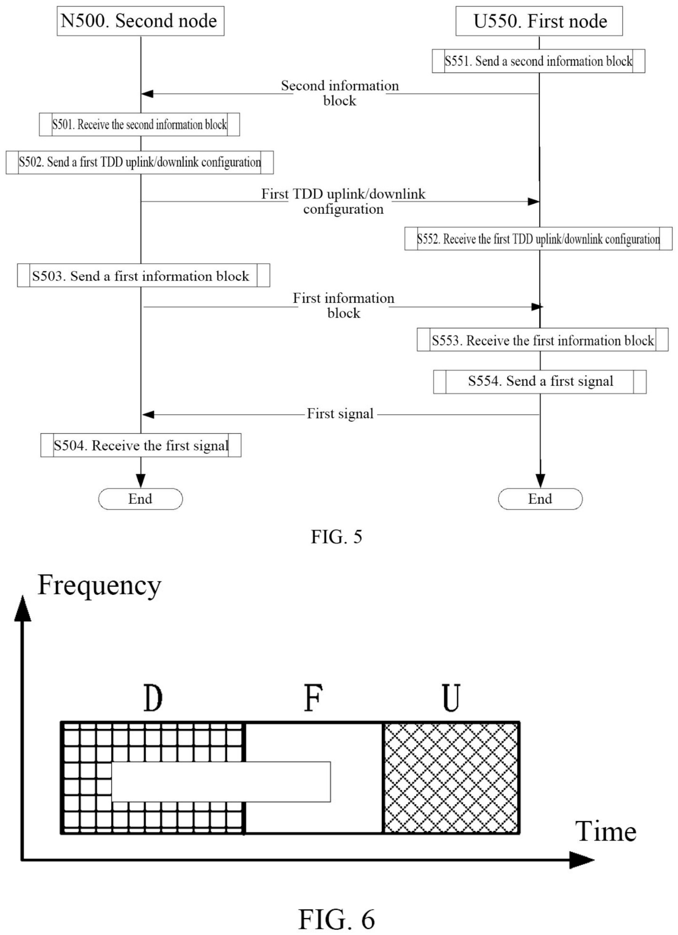

Embodiment 5 illustrates a flowchart of wireless signal transmission according to one embodiment of the present application, as shown in FIG. 5. In FIG. 5, a second node device N500 is a maintenance base station of a serving cell of a first node device U550. It is particularly noted that the order in this example does not limit the signal transmission order and implementation order in the present application.

For **the second node device N500,** a second information block is received in step S501, a first TDD uplink/downlink configuration is sent in step S502, a first information block is sent in step S503, and a first signal is received in step S504.

For **the first node device U550,** the second information block is sent in step S551, the first TDD uplink/downlink configuration is received in step S552, the first information block is received in step S553, and the first signal is sent in step S554.

In Embodiment 5, the first information block is used for determining at least one first-type symbol, and a downlink symbol indicated by the first TDD uplink/downlink configuration and overlapping with the first-type symbol is used for uplink transmission; the first signal is used for carrying a first HARQ-ACK codebook; the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; a first row index is one row index included in the candidate row index set, at least one symbol included in a PDSCH time domain resource indicated by the first row index belongs to the first-type symbol, and the target row index set comprises at least one row index other than the first row index in the candidate row index set; and the second information block is used for indicating at least one capability parameter value of a sender of the second information block, and the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook.

As one embodiment, the second information block is transmitted through an air interface or a wireless interface.

As one embodiment, the second information block comprises all or part of high layer signaling or physical layer signaling.

As one embodiment, the second information block is earlier than the first information block.

As one embodiment, the second information block is later than the first information block.

As one embodiment, the second information block is prior to the first TDD uplink/downlink configuration.

As one embodiment, the second information block is subsequent to the first TDD uplink/downlink configuration.

As one embodiment, the second information block comprises all or part of RRC signaling, or the second information block comprises all or part of MAC layer signaling.

As one embodiment, the second information block is transmitted through a PUSCH or PUCCH (Physical Uplink Control Channel).

As one embodiment, the second information block is used for indicating the capability of the first node device in the present application.

As one embodiment, the sender of the second information block is the first node device in the present application.

As one embodiment, the sender of the second information block and the first node device are equivalent or may be used interchangeably.

As one embodiment, the technical feature of "the second information block is used for indicating at least one capability parameter value of a sender of the second information block" comprises the following meaning: the second information block is used for indicating at least one capability parameter value of the sender of the second information block by the first node device in the present application.

As one embodiment, the technical feature of "the second information block is used for indicating at least one capability parameter value of a sender of the second information block" comprises the following meaning: all or part included in the second information block are/is used for explicitly or implicitly indicating at least one capability parameter value of the sender of the second information block.

As one embodiment, the second information block comprises IE "Phy-ParametersFRX-Diff", or the second information block comprises IE "UE-NR-Capability".

As one embodiment, the second information block is per UE. As one dependent embodiment of the above embodiment, signaling the second information block per user equipment may reduce standard complexity.

As one embodiment, the second information block is per band. As one dependent embodiment of the above embodiment, signaling the second information block per band may be optimized for different bands to simplify product implementation.

As one embodiment, the second information block is per band combination. As one dependent embodiment of the above embodiment, signaling the second information block per band combination may be optimized for band combinations to achieve a balance between standard complexity and product implementation complexity.

As one embodiment, the second information block is per feature set. As one dependent embodiment of the above embodiment, signaling the second information block per feature set may be optimized for features to reduce signaling overhead.

As one embodiment, the second information block is per feature set per component carrier. As one dependent embodiment of the above embodiment, signaling the second information block per feature set per component carrier may improve flexibility, and reduce product implementation complexity while reducing signaling overhead.

As one embodiment, the second information block has different parameter values between FDD (Frequency Division Duplexing) and TDD (Time Division Duplexing).

As one embodiment, the second information block is applied only to TDD.

As one embodiment, the second information block has different parameter values among different frequency ranges (FRs). As one dependent embodiment of the above embodiment, having different parameter values in different frequency ranges may optimize product implementation for the frequency ranges and improve flexibility.

As one embodiment, the second information block has the same parameter value among different frequency ranges. As one dependent embodiment of the above embodiment, having the same parameter values in different frequency ranges may support a unified design and reduce standard complexity.

As one embodiment, the second information block comprises IE "BandCombinationList", or the second information block comprises IE "BandCombination", or the second information block comprises IE "BandNR", or the second information block comprises IE "FeatureSetUplink", or the second information block comprises IE "FeatureSetUplinkPerCC", or the second information block comprises IE "Phy-Parameters".

As one embodiment, at least one capability parameter value of the sender of the second information block is a BOOLEAN parameter value, or at least one capability parameter value of the sender of the second information block is an integer, or at least one capability parameter value of the sender of the second information block is a cell list, or at least one capability parameter value of the sender of the second information block is an ENUMERATED parameter value, or at least one capability parameter value of the sender of the second information block is a CHOICE parameter value, or at least one capability parameter value of the sender of the second information block is a SEQUENCE parameter value.

As one embodiment, the technical feature of "the second information block is used for indicating at least one capability parameter value of a sender of the second information block" comprises the following meaning: the second information block is used for indicating at least one capability parameter value by the first node device in the present application.

As one embodiment, the technical feature of "the second information block is used for indicating at least one capability parameter value of a sender of the second information block" comprises the following meaning: all or part included in the second information block are/is used for explicitly or implicitly indicating at least one capability parameter value of the sender of the second information block.

As one embodiment, the technical feature of "the second information block is used for indicating at least one capability parameter value of a sender of the second information block" comprises the following meaning: the second information block is used for indicating only one capability parameter value of the sender of the second information block.

As one embodiment, the technical feature of "the second information block is used for indicating at least one capability parameter value of a sender of the second information block" comprises the following meaning: the second information block is used for indicating a plurality of capability parameter values of the sender of the second information block.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook, by the first node device in the present application.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for reporting support for the downlink symbol indicated by the first TDD uplink/downlink configuration and overlapping with the first-type symbol being used for uplink transmission.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for reporting support for generation of the first HARQ-ACK codebook.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating that the first node device supports at least one of the following two: the downlink symbol indicated by the first TDD uplink/downlink configuration and overlapping with the first-type symbol being used for uplink transmission and generation of the first HARQ-ACK codebook.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating that the first node device supports SBFD.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating that the first node device supports a subband configuration for full duplex.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating that the first node device supports a Type-1 HARQ-ACK codebook in SBFD.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating whether the first node device supports separate HARQ-ACK codebooks in SBFD symbols and non-SBFD symbols.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating that the first node device supports either separate HARQ-ACK codebooks in SBFD symbols and non-SBFD symbols or joint HARQ-ACK codebooks in SBFD symbols and non-SBFD symbols.

As one embodiment, the technical feature of "the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook" comprises the following meaning: at least one capability parameter value of the sender of the second information block is used for explicitly or implicitly indicating that the first node device supports SBFD and indicates that the first node device supports either separate HARQ-ACK codebooks in SBFD symbols and non-SBFD symbols or joint HARQ-ACK codebooks in SBFD symbols and non-SBFD symbols.

As one embodiment, separate HARQ-ACK codebooks in SBFD symbols and non-SBFD symbols are simple to design and have good compatibility.

As one embodiment, joint HARQ-ACK codebooks in SBFD symbols and non-SBFD symbols may save signaling overhead.

### Embodiment 6

Embodiment 6 illustrates a schematic diagram of a first subband according to one embodiment of the present application, as shown in FIG. 6. In FIG. 6, a horizontal axis represents time, a vertical axis represents a frequency, an area filled with cross lines represents an area indicated as a downlink symbol (D) by a first TDD uplink/downlink configuration, an area filled with intersecting lines represents an area indicated as an uplink symbol (U) by the first TDD uplink/downlink configuration, an unfilled area is a flexible symbol (F) area, and a gray filled area represents the first subband in a frequency.

In Embodiment 6, a first information block in the present application is used for determining the first subband, and the first subband comprises at least one resource block; and a symbol indicated as a downlink by the first TDD uplink/downlink configuration in the present application and overlapping with a first-type symbol in the present application is used for uplink transmission in the first subband.

As one embodiment, the first subband is configured through the first information block, thereby supporting configuring a subband per subcarrier spacing and configuring a time domain symbol per subband and improving flexibility of an SBFD configuration.

As one embodiment, the first subband is one full duplex subband.

As one embodiment, the first subband is one full duplex subband for an uplink.

As one embodiment, the first subband is a subband that can be used for uplink transmission in a downlink symbol or a flexible symbol.

As one embodiment, the first subband comprises a guard frequency domain resource.

As one embodiment, the first subband does not comprise a guard frequency domain resource.

As one embodiment, the first subband comprises consecutive frequency domain resources.

As one embodiment, the first subband comprises a discrete frequency domain resource.

As one embodiment, one uplink BWP comprises all or part of frequency domain resources in the first subband.

As one embodiment, one uplink active BWP comprises all or part of frequency domain resources in the first subband.

As one embodiment, the first subband has overlapping frequency domain resources with one uplink BWP.

As one embodiment, the first subband has no overlapping frequency domain resources with one uplink BWP.

As one embodiment, the first subband comprises a positive integer number of RBs.

As one embodiment, boundaries of RBs (Resource Blocks) included in the first subband are aligned with boundaries of RBs in an uplink BWP.

As one embodiment, the first subband is per numerology or per subcarrier spacing.

As one embodiment, the first subband is per resource grid.

As one embodiment, boundaries of RBs included in the first subband are aligned with boundaries of RBs in a downlink BWP.

As one embodiment, the technical feature of "a first information block is used for determining the first subband" comprises the following meaning: all or part included in the first information block are/is used for explicitly or implicitly indicating the first subband.

As one embodiment, the technical feature of "a first information block is used for determining the first subband" comprises the following meaning: the first information block is used for determining the first subband by a first node device in the present application.

As one embodiment, the technical feature of "a first information block is used for determining the first subband" comprises the following meaning: all or part included in the first information block are/is used for explicitly or implicitly indicating start RBs (or RBs with lowest indexes) of the first subband.

As one embodiment, the technical feature of "a first information block is used for determining the first subband" comprises the following meaning: all or part included in the first information block are/is used for explicitly or implicitly indicating the number of RBs included in the first subband.

As one embodiment, the technical feature of "a first information block is used for determining the first subband" comprises the following meaning: all or part included in the first information block are/is used for explicitly or implicitly indicating an RIV (resource indicator value) corresponding to the first subband.

As one embodiment, the technical feature of "a first information block is used for determining the first subband" comprises the following meaning: all or part included in the first information block are/is used for explicitly or implicitly indicating an RIV corresponding to the first subband, and a start RB and the number of consecutive RBs included in the first subband are used for generating a corresponding RIV.

As one embodiment, the technical feature of "a first information block is used for determining the first subband" comprises the following meaning: all or part included in the first information block are/is used for explicitly or implicitly indicating an SLIV (start and length indicator value) corresponding to the first subband.

As one embodiment, the technical feature of "a first information block is used for determining the first subband" comprises the following meaning: all or part included in the first information block are/is used for explicitly or implicitly indicating an SLIV corresponding to the first subband, and a start RB and the number of consecutive RBs included in the first subband are used for generating a corresponding SLIV.

As one embodiment, the technical feature of "a first information block is used for determining the first subband" comprises the following meaning: the first information block is used for determining at least one CRB (common resource block) included in the first subband.

As one embodiment, the technical feature of "a first information block is used for determining the first subband" comprises the following meaning: the first information block is used for determining the number of CRBs spaced between CRBs with lowest indexes included in the first subband and a point A and the number of consecutive CRBs included in the first subband.

As one embodiment, the technical feature of "a first information block is used for determining the first subband" comprises the following meaning: the first information block is used for determining the number of CRBs spaced between CRBs with lowest indexes included in the first subband for a reference subcarrier spacing and the point A for the reference subcarrier spacing and the number of consecutive CRBs included in the first subband for the reference subcarrier spacing. As one dependent embodiment of the above embodiment, the reference subcarrier spacing is equal to a subcarrier spacing of one carrier. As one dependent embodiment of the above embodiment, the reference subcarrier spacing is equal to a subcarrier spacing in a resource grid of one uplink. As one dependent embodiment of the above embodiment, the reference subcarrier spacing is equal to a subcarrier spacing in a resource grid of one downlink. As one dependent embodiment of the above embodiment, the reference subcarrier spacing is related to a frequency range (FR). As one dependent embodiment of the above embodiment, the reference subcarrier spacing is predefined or configured. As one dependent embodiment of the above embodiment, the reference subcarrier spacing is a maximum value in subcarrier spacings targeted respectively by a plurality of configured uplink resource grids. As one dependent embodiment of the above embodiment, the reference subcarrier spacing is a maximum value in subcarrier spacings targeted respectively by a plurality of configured downlink resource grids. As one dependent embodiment of the above embodiment, the reference subcarrier spacing is a maximum value in subcarrier spacings targeted respectively by all configured resource grids. As one dependent embodiment of the above embodiment, the reference subcarrier spacing is a minimum value in subcarrier spacings targeted respectively by a plurality of configured uplink resource grids. As one dependent embodiment of the above embodiment, the reference subcarrier spacing is a minimum value in subcarrier spacings targeted respectively by a plurality of configured downlink resource grids. As one dependent embodiment of the above embodiment, the reference subcarrier spacing is a minimum value in subcarrier spacings targeted respectively by all configured resource grids.

As one embodiment, the technical feature of "a first information block is used for determining the first subband" comprises the following meaning: the first information block is used for determining M1 subbands respectively from M1 resource grids, M1 is a positive integer greater than 1, and the first subband is one of the M1 subbands. As one dependent embodiment of the above embodiment, the M1 resource grids are for M1 subcarrier spacings, respectively, and the first subband is a subband in the M1 subbands corresponding to subcarriers used by an uplink active BWP. As one dependent embodiment of the above embodiment, the M1 resource grids are M1 uplink resource grids. As one dependent embodiment of the above embodiment, the M1 resource grids are M1 downlink resource grids. As one dependent embodiment of the above embodiment, the M1 resource grids comprise both uplink resource grids and downlink resource grids. As one dependent embodiment of the above embodiment, the M1 resource grids are configured.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and overlapping with the first-type symbol can (or may or is allowed to or is scheduled to) be used for uplink transmission in the first subband.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and overlapping with the first-type symbol is available for uplink transmission in the first subband.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and overlapping with the first-type symbol is actually used for uplink transmission in the first subband.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and overlapping with the first-type symbol is not used for uplink transmission in the first subband.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and overlapping with the first-type symbol can be scheduled or configured for uplink transmission in the first subband.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and overlapping with the first-type symbol may be used for uplink transmission in frequency domain resources overlapping between the first subband and an uplink active BWP.

As one embodiment, the technical feature of "a symbol indicated as a downlink by the first TDD uplink/downlink configuration and overlapping with the first-type symbol is used for uplink transmission in the first subband" comprises the following meaning: a symbol indicated as a downlink by the first TDD uplink/downlink configuration and belonging to the first-type symbol is used for uplink transmission in the first subband.

As one embodiment, a symbol indicated as a flexible link by the first TDD uplink/downlink configuration and overlapping with the first-type symbol may be used for uplink transmission in the first subband.

As one embodiment, the technical feature of "a symbol indicated as a downlink by the first TDD uplink/downlink configuration and overlapping with the first-type symbol is used for uplink transmission in the first subband" comprises the following meaning: user equipment considers that a symbol indicated as a downlink by the first TDD uplink/downlink configuration and overlapping with the first-type symbol is available for transmission in the first subband.

As one embodiment, the technical feature of "a symbol indicated as a downlink by the first TDD uplink/downlink configuration and overlapping with the first-type symbol is used for uplink transmission in the first subband" comprises the following meaning: if a DCI format or an RAR UL grant or a fallback RAR UL grant or a success RAR is received, in at least one symbol overlapping with the first-type symbol and indicated as a downlink by the first TDD uplink/downlink configuration and the first subband, user equipment sends a PUSCH, a PUCCH, a PRACH, or an SRS correspondingly.

### Embodiment 7

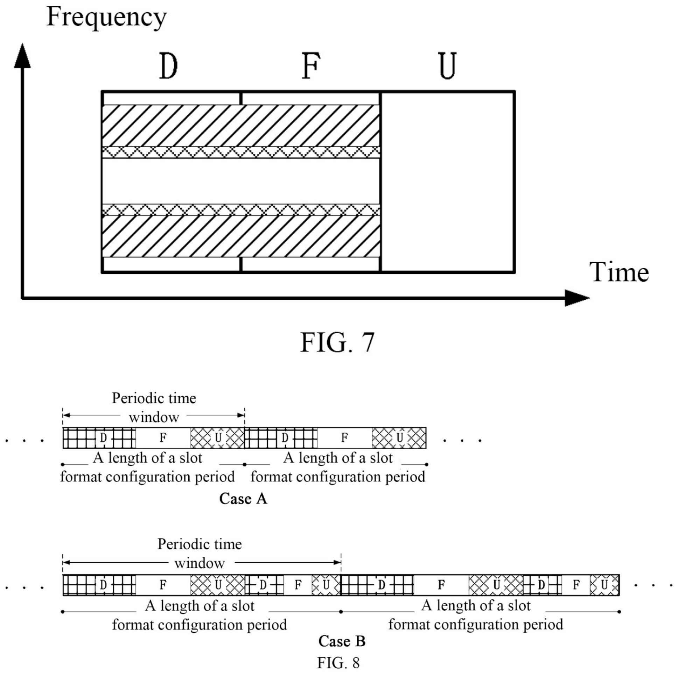

Embodiment 7 illustrates a schematic diagram of a second subband according to one embodiment of the present application, as shown in FIG. 7. In FIG. 7, a horizontal axis represents time, a vertical axis represents a frequency, an area filled with diagonal lines represents the second subband in a frequency domain, a gray filled area represents one subband that may be used for uplink transmission in a frequency, and an area filled with cross lines represents a guard frequency domain resource in the frequency domain; and "D" represents an area indicated as a downlink symbol by a first TDD uplink/downlink configuration in a time domain, "U" represents an area indicated as an uplink symbol by the first TDD uplink/downlink configuration in the time domain, and "F" represents a flexible symbol area in the time domain.

In Embodiment 7, a symbol indicated as a downlink by the first TDD uplink/downlink configuration in the present application and overlapping with a first-type symbol in the present application is used for downlink transmission in the second subband; and the second subband is not provided or the second subband is orthogonal to a downlink BWP.

As one embodiment, by requiring that the second subband is orthogonal to a downlink BWP, only HARQ-ACK bits corresponding to PDSCH candidate occasions where downlink transmission cannot be performed are excluded from a first HARQ-ACK codebook, which avoids the loss of the HARQ-ACK bits and ensures transmission quality.

As one embodiment, the second subband is one downlink full duplex subband.

As one embodiment, the second subband is one full duplex subband configured as a downlink.

As one embodiment, the second subband is a subband that may be used for downlink transmission in the first-type symbol.

As one embodiment, the second subband comprises the guard frequency domain resource.

As one embodiment, the second subband does not comprise the guard frequency domain resource.

As one embodiment, the second subband comprises consecutive frequency domain resources.

As one embodiment, the second subband comprises a discrete frequency domain resource.

As one embodiment, all or part included in a first information block are/is used for explicitly or implicitly indicating or configuring the second subband.

As one embodiment, a first subband in the present application is used for determining the second subband.

As one embodiment, the second subband is a part other than the first subband and the guard frequency domain resource in the present application.

As one embodiment, the second subband and the first subband in the present application are configured through two different fields or IEs, respectively.

As one embodiment, the second subband is a part other than the first subband and the guard frequency domain resource in the present application within a carrier for one subcarrier spacing.

As one embodiment, the second subband is a part other than the first subband and the guard frequency domain resource in the present application within a channel bandwidth for one subcarrier spacing.

As one embodiment, the second subband is a part other than the first subband and the guard frequency domain resource in the present application within a transmission bandwidth configuration for one subcarrier spacing.

As one embodiment, the second subband comprises a non-negative integer number of RBs.

As one embodiment, boundaries of RBs included in the second subband are aligned with boundaries of RBs in a downlink BWP.

As one embodiment, the second subband is per numerology or per subcarrier spacing.

As one embodiment, the second subband is per resource grid.

As one embodiment, boundaries of RBs included in the second subband are aligned with boundaries of RBs in an uplink BWP.

As one embodiment, the technical feature of "a symbol indicated as a downlink by the first TDD uplink/downlink configuration and overlapping with the first-type symbol is used for downlink transmission in a second subband" comprises the following meaning: a symbol indicated as a downlink by the first TDD uplink/downlink configuration and overlapping with the first-type symbol can (or may or is allowed to or is configured to) be used for downlink transmission in the second subband.

As one embodiment, the technical feature of "a symbol indicated as a downlink by the first TDD uplink/downlink configuration and overlapping with the first-type symbol is used for downlink transmission in a second subband" comprises the following meaning: a symbol indicated as a downlink by the first TDD uplink/downlink configuration and overlapping with the first-type symbol can only be used for downlink transmission in the second subband.

As one embodiment, the technical feature of "a symbol indicated as a downlink by the first TDD uplink/downlink configuration and overlapping with the first-type symbol is used for downlink transmission in a second subband" comprises the following meaning: a symbol indicated as a downlink by the first TDD uplink/downlink configuration and overlapping with the first-type symbol cannot be used for uplink transmission in the second subband.

As one embodiment, the technical feature of "a symbol indicated as a downlink by the first TDD uplink/downlink configuration and overlapping with the first-type symbol is used for downlink transmission in a second subband" comprises the following meaning: user equipment considers that at least one symbol indicated as a downlink by the first TDD uplink/downlink configuration and overlapping with the first-type symbol is available for reception in the second subband.

As one embodiment, the technical feature of "a symbol indicated as a downlink by the first TDD uplink/downlink configuration and overlapping with the first-type symbol is used for downlink transmission in a second subband" comprises the following meaning: user equipment considers that at least one symbol indicated as a downlink by the first TDD uplink/downlink configuration and belonging to the first-type symbol is available for reception in the second subband.

As one embodiment, the technical feature of "a symbol indicated as a downlink by the first TDD uplink/downlink configuration and overlapping with the first-type symbol is used for downlink transmission in a second subband" comprises the following meaning: if a DCI format is received, in at least one symbol overlapping with the first-type symbol and indicated as a downlink by the first TDD uplink/downlink configuration, user equipment receives a PDSCH or a CSI-RS (channel status information reference signal) in the second subband correspondingly.

As one embodiment, a symbol indicated as a downlink by the first TDD uplink/downlink configuration and overlapping with the first-type symbol may also be used for downlink transmission other than the second subband. As one dependent embodiment of the above embodiment, advantage of doing so is to improve spectrum utilization and maintain backward compatibility.

As one embodiment, a symbol indicated as a downlink by the first TDD uplink/downlink configuration and overlapping with the first-type symbol is not allowed to be used for downlink transmission other than the second subband. As one dependent embodiment of the above embodiment, advantages of doing so are to be simple to design and reduce complexity.

As one embodiment, "a symbol indicated as a downlink by the first TDD uplink/downlink configuration and overlapping with the first-type symbol" and "a downlink symbol indicated by the first TDD uplink/downlink configuration and overlapping with the first-type symbol" are equivalent or may be used interchangeably.

As one embodiment, the technical feature of "the second subband is not provided" comprises the following meaning: the second subband is not configured.

As one embodiment, the technical feature of "the second subband is not provided" comprises the following meaning: signaling or a field or an IE or a parameter used for configuring or indicating the second subband is not provided.

As one embodiment, the technical feature of "the second subband is not provided" comprises the following meaning: signaling or a field or an IE or a parameter used for configuring or indicating the second subband is absent.

As one embodiment, the technical feature of "the second subband is not provided" comprises the following meaning: signaling or a field or an IE or a parameter used for configuring or indicating the second subband is not provided, or the number of resources included in the second subband is configured or indicated to be 0.

As one embodiment, the technical feature of "the second subband is not provided" comprises the following meaning: no frequency domain resources are used for the second subband.

As one embodiment, the technical feature of "the second subband is not provided" comprises the following meaning: no remaining frequency domain resources are available for the second subband other than the first subband and the guard frequency domain resource in the present application.

As one embodiment, the technical feature of "the second subband is not provided" comprises the following meaning: no frequency domain resources are available for the second subband other than the first subband in the present application.

As one embodiment, the technical feature of "the second subband is not provided" comprises the following meaning: a frequency domain resource included in the second subband is 0.

As one embodiment, the technical feature of "the second subband is not provided" comprises the following meaning: the number of RBs included in the second subband is less than one threshold. As one dependent embodiment of the above embodiment, the threshold is equal to the size of an RBG (resource block group). As one dependent embodiment of the above embodiment, the threshold is equal to 1. As one dependent embodiment of the above embodiment, the threshold is predefined or is configurable. As one dependent embodiment of the above embodiment, the threshold is considered, thereby maximizing resource utilization. As one dependent embodiment of the above embodiment, the threshold is related to the size of an RBG, which may maximize resource utilization and reduce design complexity under the condition that the scheduling granularity is considered.

As one embodiment, the technical feature of "the second subband is orthogonal to a downlink BWP" comprises the following meaning: the second subband is orthogonal to an active downlink BWP. As one dependent embodiment of the above embodiment, an active downlink BWP is only considered, which avoids unnecessary generation of HARQ-ACK bits and reduces signaling overhead.

As one embodiment, the technical feature of "the second subband is orthogonal to a downlink BWP" comprises the following meaning: in a symbol indicated as a downlink by the first TDD uplink/downlink configuration and overlapping with the first-type symbol, the second subband is orthogonal to an active downlink BWP.

As one embodiment, the technical feature of "the second subband is orthogonal to a downlink BWP" comprises the following meaning: the second subband is orthogonal to any one configured downlink BWP. As one dependent embodiment of the above embodiment, all configured downlink BWPs are considered, which avoids the loss of HARQ-ACK bits and ensures robustness.

As one embodiment, the technical feature of "the second subband is orthogonal to a downlink BWP" comprises the following meaning: in an occasion associated with the first HARQ-ACK codebook, the second subband is orthogonal to an active downlink BWP.

As one embodiment, the technical feature of "the second subband is orthogonal to a downlink BWP" comprises the following meaning: in a PDSCH resource indicated by a row indexed by a target row index set, the second subband is orthogonal to an active downlink BWP.

As one embodiment, the technical feature of "the second subband is orthogonal to a downlink BWP" comprises the following meaning: in any one candidate occasion in a first candidate occasion set in the present application, the second subband is orthogonal to an active downlink BWP.

As one embodiment, the technical feature of "the second subband is orthogonal to a downlink BWP" comprises the following meaning: the second subband is orthogonal to at least one downlink BWP.

As one embodiment, the technical feature of "the second subband is orthogonal to a downlink BWP" comprises the following meaning: there exist no overlapping frequency domain resources between the second subband and at least one downlink BWP.

As one embodiment, user equipment does not expect to perform reception in a frequency domain resource other than the second subband in the first-type symbol.

As one embodiment, user equipment does not expect a frequency domain resource other than the second subband in the first-type symbol to be used for downlink transmission.

As one embodiment, user equipment does not expect to be scheduled or configured for reception in a frequency domain resource other than the second subband in the first-type symbol.

As one embodiment, user equipment does not expect a frequency domain resource other than the second subband in the first-type symbol to be scheduled or configured for downlink transmission.

As one embodiment, user equipment does not expect to perform reception in a frequency domain resource other than the second subband in a symbol indicated as a downlink by the first TDD uplink/downlink configuration and overlapping with the first-type symbol.

As one embodiment, user equipment does not expect a frequency domain resource other than the second subband in a symbol indicated as a downlink by the first TDD uplink/downlink configuration and overlapping with the first-type symbol to be used for downlink transmission.

As one embodiment, user equipment does not expect to be scheduled or configured for reception in a frequency domain resource other than the second subband in a symbol indicated as a downlink by the first TDD uplink/downlink configuration and overlapping with the first-type symbol.

As one embodiment, user equipment does not expect a frequency domain resource other than the second subband in a symbol indicated as a downlink by the first TDD uplink/downlink configuration and overlapping with the first-type symbol to be scheduled or configured for downlink transmission.

### Embodiment 8

Embodiment 8 illustrates a schematic diagram of a periodic time window according to one embodiment of the present application, as shown in FIG. 8. In FIG. 8, in case A and case B, each rectangle filled with cross lines represents at least one downlink (D) symbol indicated by a first TDD uplink/downlink configuration, each rectangle filled with intersecting lines represents at least one uplink (U) symbol indicated by the first TDD uplink/downlink configuration, and each unfilled rectangle represents at least one flexible (F) time domain symbol; in case A, only a distribution pattern of one slot format is included in one periodic time window; and in case B, distribution patterns of two slot formats are included in one periodic time window.

In Embodiment 8, a first information block in the present application is used for indicating at least one of a first-type symbols in the present application from the periodic time window, the periodic time window comprises a plurality of consecutive symbols, and a time length of the periodic time window is related to a length of a slot format configuration period.

As one embodiment, the time length of the periodic time window is related to the length of the slot format configuration period, which ensures configuration flexibility while reducing configuration signaling overhead.

As one embodiment, the first TDD uplink/downlink configuration is used for determining the length of the slot format configuration period.

As one embodiment, signaling other than the first TDD uplink/downlink configuration is used for determining the length of the slot format configuration period.

As one embodiment, the first information block is used for determining the length of the slot format configuration period.

As one embodiment, signaling other than the first information block is used for determining the length of the slot format configuration period.

As one embodiment, the length of the slot format configuration period is a period length of an uplink/downlink configuration of TDD.

As one embodiment, the length of the slot format configuration period is a length of a slot configuration period.

As one embodiment, the length of the slot format configuration period is a DL-UL-transmission periodicity.

As one embodiment, the length of the slot format configuration period is a period length in which a pattern configuring a slot format is periodically applied.

As one embodiment, the length of the slot format configuration period is equal to a length of a slot configuration period provided in a pattern 1.

As one embodiment, the length of the slot format configuration period is equal to a length of a slot configuration period provided in a pattern 2.

As one embodiment, the length of the slot format configuration period is equal to the sum of the length of the slot configuration period provided by the pattern 1 and the length of the slot configuration period provided by the pattern 2.

As one embodiment, the length of the slot format configuration period is equal to one DL-UL-transmission periodicity.

As one embodiment, the length of the slot format configuration period is equal to the sum of two independent DL-UL-transmission periodicities.

As one embodiment, the first information block is used for determining the periodic time window.

As one embodiment, the periodic time window is one slot configuration period.

As one embodiment, the periodic time window is aligned with one slot configuration period.

As one embodiment, the periodic time window comprises a plurality of consecutive slot configuration periods.

As one embodiment, the first information block is used for determining the number of slot configuration periods included in the periodic time window.

As one embodiment, the first information block is used for determining a start position of the periodic time window.

As one embodiment, the first information block is used for determining the time length of the periodic time window.

As one embodiment, the periodic time window is any one time window among time windows appearing periodically.

As one embodiment, the periodic time window is one time window among time windows appearing periodically.

As one embodiment, the start position of the periodic time window is predefined or is configurable.

As one embodiment, a unit of the time length of the periodic time window is in milliseconds.

As one embodiment, the time length of the periodic time window is expressed by the number of slots or the number of symbols.

As one embodiment, the time length of the periodic time window is expressed by the number of slots or the number of symbols corresponding to one reference subcarrier spacing. As one dependent embodiment of the above embodiment, the first TDD uplink/downlink configuration is used for determining the reference subcarrier spacing. As one dependent embodiment of the above embodiment, the first information block is used for determining the reference subcarrier spacing. As one dependent embodiment of the above embodiment, the reference subcarrier spacing is equal to a subcarrier spacing of an RB included in a first subband in the present application. As one dependent embodiment of the above embodiment, the reference subcarrier spacing is predefined or is configurable. As one dependent embodiment of the above embodiment, the reference subcarrier spacing is equal to a subcarrier spacing used by a slot format configuration.

As one embodiment, the technical feature of "the first information block is used for indicating at least one of the first-type symbols from a periodic time window" comprises the following meaning: all or part included in the first information block are/is used for explicitly or implicitly indicating at least one of the first-type symbols from the periodic time window.

As one embodiment, the technical feature of "the first information block is used for indicating at least one of the first-type symbols from a periodic time window" comprises the following meaning: all or part included in the first information block are/is used for explicitly or implicitly indicating at least one of the first-type symbols for one subband from the periodic time window.

As one embodiment, the technical feature of "the first information block is used for indicating at least one of the first-type symbols from a periodic time window" comprises the following meaning: all or part included in the first information block are/is used for explicitly or implicitly indicating that at least one symbol belongs to the first-type symbol from the periodic time window.

As one embodiment, the technical feature of "the first information block is used for indicating at least one of the first-type symbols from a periodic time window" comprises the following meaning: the first information block comprises one bitmap, any one bit in the bitmap corresponds to one symbol in the periodic time window, and a symbol in the periodic time window corresponding to a bit with a bit value equal to "1" in the bitmap is the first-type symbol. As one dependent embodiment of the above embodiment, a link direction of a symbol in the periodic time window corresponding to a bit with a bit value equal to "0" in the bitmap is provided by "tdd-UL-DL-ConfigCommon" or "tdd-UL-DL-ConfigDedicated". As one dependent embodiment of the above embodiment, a symbol in the periodic time window corresponding to a bit with a bit value equal to "0" in the bitmap is a downlink symbol or a flexible symbol. As one dependent embodiment of the above embodiment, any one bit in the bitmap corresponds to a symbol indicated as a downlink symbol or a flexible symbol by "tdd-UL-DL-ConfigCommon" or "tdd-UL-DL-ConfigDedicated" in the periodic time window. As one dependent embodiment of the above embodiment, the number of bits included in the bitmap is equal to the number of symbols included in the periodic time window. As one dependent embodiment of the above embodiment, the number of bits included in the bitmap is equal to the number of symbols, corresponding to the reference subcarrier spacing, included in the periodic time window, and the reference subcarrier spacing is equal to a subcarrier spacing of an RB included in the first subband in the present application, or the reference subcarrier spacing is equal to a subcarrier spacing used by a slot format configuration. As one dependent embodiment of the above embodiment, the number of bits included in the bitmap is equal to a positive integer multiple of the number of symbols included in the periodic time window and indicated as downlink symbols or flexible symbols by "tdd-UL-DL-ConfigCommon" or "tdd-UL-DL-ConfigDedicated". As one dependent embodiment of the above embodiment, the first information block is used for indicating at least one symbol per SCS from the periodic time window.

As one embodiment, the technical feature of "the first information block is used for indicating at least one of the first-type symbols from a periodic time window" comprises the following meaning: the first information block comprises one bitmap, any one bit in the bitmap corresponds to one symbol in the periodic time window, and a symbol in the periodic time window corresponding to a bit with a bit value equal to "0" in the bitmap is the first-type symbol. As one dependent embodiment of the above embodiment, a link direction of a symbol in the periodic time window corresponding to a bit with a bit value equal to "1" in the bitmap is provided by "tdd-UL-DL-ConfigCommon" or "tdd-UL-DL-ConfigDedicated". As one dependent embodiment of the above embodiment, a symbol in the periodic time window corresponding to a bit with a bit value equal to "1" in the bitmap is a downlink symbol or a flexible symbol. As one dependent embodiment of the above embodiment, any one bit in the bitmap corresponds to a symbol indicated as a downlink symbol or a flexible symbol by "tdd-UL-DL-ConfigCommon" or "tdd-UL-DL-ConfigDedicated" in the periodic time window. As one dependent embodiment of the above embodiment, the number of bits included in the bitmap is equal to the number of symbols included in the periodic time window. As one dependent embodiment of the above embodiment, the number of bits included in the bitmap is equal to the number of symbols, corresponding to the reference subcarrier spacing, included in the periodic time window, and the reference subcarrier spacing is equal to a subcarrier spacing of an RB included in the first subband in the present application, or the reference subcarrier spacing is equal to a subcarrier spacing used by a slot format configuration. As one dependent embodiment of the above embodiment, the number of bits included in the bitmap is equal to a positive integer multiple of the number of symbols included in the periodic time window and indicated as downlink symbols or flexible symbols by "tdd-UL-DL-ConfigCommon" or "tdd-UL-DL-ConfigDedicated". As one dependent embodiment of the above embodiment, the first information block is used for indicating at least one symbol per SCS from the periodic time window.

As one embodiment, the technical feature of "a time length of the periodic time window is related to a length of a slot format configuration period" comprises the following meaning: the time length of the periodic time window is equal to a length of a slot format configuration period.

As one embodiment, the technical feature of "a time length of the periodic time window is related to a length of a slot format configuration period" comprises the following meaning: the length of the slot format configuration period is used for determining the time length of the periodic time window.

As one embodiment, the technical feature of "a time length of the periodic time window is related to a length of a slot format configuration period" comprises the following meaning: the time length of the periodic time window is equal to a positive integer multiple greater than 1 of the length of the slot format configuration period.

As one embodiment, the technical feature of "a time length of the periodic time window is related to a length of a slot format configuration period" comprises the following meaning: the time length of the periodic time window is equal to the sum of the length of the slot format configuration period provided by the pattern 1 and the length of the slot format configuration period provided by the pattern 2.

As one embodiment, the technical feature of "a time length of the periodic time window is related to a length of a slot format configuration period" comprises the following meaning: the time length of the periodic time window is equal to a positive integer multiple of the sum of the length of the slot format configuration period provided by the pattern 1 and the length of the slot format configuration period provided by the pattern 2.

As one embodiment, the technical feature of "a time length of the periodic time window is related to a length of a slot format configuration period" comprises the following meaning: the time length of the periodic time window is equal to a positive integer multiple of the length of the slot format configuration period, and the time length of the periodic time window being equal to a multiple of the length of the slot format configuration period depends on a second information block.

As one embodiment, the technical feature of "a time length of the periodic time window is related to a length of a slot format configuration period" comprises the following meaning: the time length of the periodic time window is equal to a positive integer multiple of the length of the slot format configuration period, and the time length of the periodic time window being equal to a multiple of the length of the slot format configuration period is related to a subcarrier spacing.

As one embodiment, the technical feature of "a time length of the periodic time window is related to a length of a slot format configuration period" comprises the following meaning: the time length of the periodic time window is linearly related to the length of the slot format configuration period.

As one embodiment, the technical feature of "a time length of the periodic time window is related to a length of a slot format configuration period" comprises the following meaning: the time length of the periodic time window is linearly proportional to the length of the slot format configuration period.

### Embodiment 9

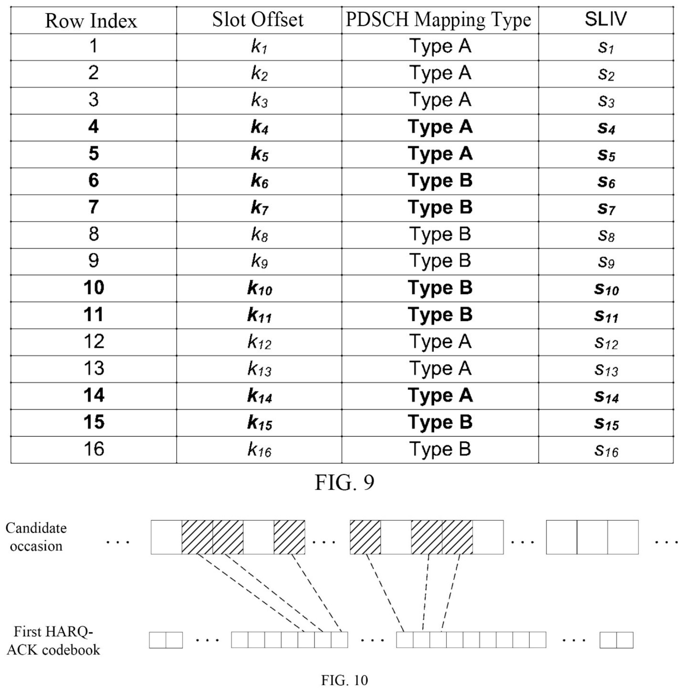

Embodiment 9 illustrates a schematic diagram of a target row index set according to one embodiment of the present application, as shown in FIG. 9. In FIG. 9, a first column from the left represents a row index, a second column from the left represents a slot frequency shift of a PDSCH indicated by the row index, a third column from the left represents a mapping type of the PDSCH indicated by the row index, and a rightmost column represents an SLIV (start and length indicator) of time domain resource assignment of the PDSCH, wherein a blackened row index is a row index in the target row index set.

In Embodiment 9, any one symbol included in a PDSCH time domain resource indicated by any one row index included in the target row index set in the present application is not indicated as an uplink by a first TDD uplink/downlink configuration in the present application.

As one embodiment, the technical feature of "any one symbol included in a PDSCH time domain resource indicated by any one row index included in the target row index set is not indicated as an uplink by the first TDD uplink/downlink configuration" comprises the following meaning: any one symbol included in a PDSCH time domain resource indicated by any one row index included in the target row index set does not overlap with any one symbol indicated as an uplink by the first TDD uplink/downlink configuration in a time domain.

As one embodiment, the technical feature of "any one symbol included in a PDSCH time domain resource indicated by any one row index included in the target row index set is not indicated as an uplink by the first TDD uplink/downlink configuration" comprises the following meaning: any one symbol included in a PDSCH time domain resource indicated by any one row index included in the target row index set is orthogonal to any one symbol indicated as an uplink by the first TDD uplink/downlink configuration in a time domain.

As one embodiment, the technical feature of "any one symbol included in a PDSCH time domain resource indicated by any one row index included in the target row index set is not indicated as an uplink by the first TDD uplink/downlink configuration" comprises the following meaning: the target row index set is a row index set obtained by removing at least a row index, for which an indicated PDSCH time domain resource comprises a symbol indicated as an uplink by the first TDD uplink/downlink configuration, from a candidate row index set.

As one embodiment, the technical feature of "any one symbol included in a PDSCH time domain resource indicated by any one row index included in the target row index set is not indicated as an uplink by the first TDD uplink/downlink configuration" comprises the following meaning: the target row index set does not comprise a row index for which an indicated PDSCH time domain resource comprises a symbol indicated as an uplink by the first TDD uplink/downlink configuration.

As one embodiment, the technical feature of "any one symbol included in a PDSCH time domain resource indicated by any one row index included in the target row index set is not indicated as an uplink by the first TDD uplink/downlink configuration" comprises the following meaning: the target row index set excludes any one row index for which an indicated PDSCH time domain resource comprises a symbol indicated as an uplink by the first TDD uplink/downlink configuration.

As one embodiment, the technical feature of "any one symbol included in a PDSCH time domain resource indicated by any one row index included in the target row index set is not indicated as an uplink by the first TDD uplink/downlink configuration" comprises the following meaning: a second row index is one row index in the candidate row index set, a PDSCH time domain resource indicated by the second row index comprises a symbol indicated as an uplink by the first TDD uplink/downlink configuration, and the target row index set comprises only at least one row index other than the second row index in the candidate row index set.

As one embodiment, the technical feature of "any one symbol included in a PDSCH time domain resource indicated by any one row index included in the target row index set is not indicated as an uplink by the first TDD uplink/downlink configuration" comprises the following meaning: the second row index is one row index in the candidate row index set, at least one symbol included in the PDSCH time domain resource indicated by the second row index overlaps with a symbol indicated as an uplink by the first TDD uplink/downlink configuration, and the target row index set comprises only at least one row index other than the second row index in the candidate row index set.

As one embodiment, the technical feature of "any one symbol included in a PDSCH time domain resource indicated by any one row index included in the target row index set is not indicated as an uplink by the first TDD uplink/downlink configuration" comprises the following meaning: the second row index is one row index in the candidate row index set, the PDSCH time domain resource indicated by the second row index comprises a symbol indicated as an uplink by the first TDD uplink/downlink configuration, and the target row index set comprises only at least one row index in the candidate row index set excluding the second row index.

### Embodiment 10

Embodiment 10 illustrates a schematic diagram of a first candidate occasion set according to one embodiment of the present application, as shown in FIG. 10. In FIG. 10, each grid above represents one candidate occasion, a candidate occasion filled with diagonal lines is a candidate occasion in the first candidate occasion set, each grid below represents one HARQ-ACK bit in a first HARQ-ACK codebook, and a dotted line connects the HARQ-ACK bit and the candidate occasion targeted by the HARQ-ACK bit.

In Embodiment 10, a target row index set in the present application is used for determining the first candidate occasion set, and the first candidate occasion set comprises at least one candidate occasion; and the first HARQ-ACK codebook in the present application comprises an HARQ-ACK bit for a candidate occasion in the first candidate occasion set.

As one embodiment, any one candidate occasion included in the first candidate occasion set is a PDSCH reception candidate occasion, or an SPS PDSCH release occasion, or a TCI status update occasion.

As one embodiment, any one candidate occasion included in the first candidate occasion set is a time domain occasion.

As one embodiment, any one candidate occasion included in the first candidate occasion set is a time frequency occasion.

As one embodiment, any one candidate occasion included in the first candidate occasion set comprises consecutive time domain resources.

As one embodiment, the technical feature of "a target row index set is used for determining the first candidate occasion set" comprises the following meaning: the target row index set is used for determining the first candidate occasion set by a first node device in the present application.

As one embodiment, the technical feature of "a target row index set is used for determining the first candidate occasion set" comprises the following meaning: the first candidate occasion set is determined based on the target row index set.

As one embodiment, the technical feature of "a target row index set is used for determining the first candidate occasion set" comprises the following meaning: the target row index set is generated according to the first candidate occasion set through a pseudo code.

As one embodiment, the technical feature of "a target row index set is used for determining the first candidate occasion set" comprises the following meaning: a PDSCH time domain resource indicated (or configured or assigned) by any one row index in the target row index set is one candidate occasion in the first candidate occasion set.

As one embodiment, the technical feature of "a target row index set is used for determining the first candidate occasion set" comprises the following meaning: a PDSCH time domain resource indicated (or configured or assigned) by any one row index in the target row index set belongs to one candidate occasion in the first candidate occasion set.

As one embodiment, the technical feature of "a target row index set is used for determining the first candidate occasion set" comprises the following meaning: a PDSCH time domain resource assigned by a row indexed by any one row index in the target row index set belongs to one candidate occasion in the first candidate occasion set.

As one embodiment, the technical feature of "a target row index set is used for determining the first candidate occasion set" comprises the following meaning: the first candidate occasion set comprises an occasion to which a PDSCH time domain resource indicated (or configured or assigned) by any one row index in the target row index set belongs.

As one embodiment, the technical feature of "a target row index set is used for determining the first candidate occasion set" comprises the following meaning: the target row index set determines the first candidate occasion set based on a predefined correspondence or mapping relationship.

As one embodiment, the technical feature of "the first HARQ-ACK codebook comprises an HARQ-ACK bit for a candidate occasion in the first candidate occasion set" comprises the following meaning: any one HARQ-ACK bit included in the first HARQ-ACK codebook is used for indicating whether a PDSCH or a PDCCH that may occupy candidate occasions in the first candidate occasion set is correctly decoded.

As one embodiment, the technical feature of "the first HARQ-ACK codebook comprises an HARQ-ACK bit for a candidate occasion in the first candidate occasion set" comprises the following meaning: there is a mapping or correspondence relationship between HARQ-ACK bits included in the first HARQ-ACK codebook and candidate occasions in the first candidate occasion set.

As one embodiment, the technical feature of "the first HARQ-ACK codebook comprises an HARQ-ACK bit for a candidate occasion in the first candidate occasion set" comprises the following meaning: any one HARQ-ACK bit included in the first HARQ-ACK codebook is used for indicating whether a PDSCH or a PDCCH that may occupy candidate occasions in the first candidate occasion set is correctly decoded.

As one embodiment, the technical feature of "the first HARQ-ACK codebook comprises an HARQ-ACK bit for a candidate occasion in the first candidate occasion set" comprises the following meaning: a bit value of any one HARQ-ACK bit included in the first HARQ-ACK codebook is generated according to decoding results of a PDSCH or a PDCCH that may occupy candidate occasions in the first candidate occasion set.

As one embodiment, the technical feature of "the first HARQ-ACK codebook comprises an HARQ-ACK bit for a candidate occasion in the first candidate occasion set" comprises the following meaning: the arrangement of HARQ-ACK bits included in the first HARQ-ACK codebook is related to the arrangement of candidate occasions in the first candidate occasion set.

As one embodiment, the technical feature of "the first HARQ-ACK codebook comprises an HARQ-ACK bit for a candidate occasion in the first candidate occasion set" comprises the following meaning: at least one HARQ-ACK bit for any one candidate occasion in the first candidate occasion set belongs to the first HARQ-ACK codebook.

As one embodiment, the technical feature of "the first HARQ-ACK codebook comprises an HARQ-ACK bit for a candidate occasion in the first candidate occasion set" comprises the following meaning: for candidate occasions occupied by a PDSCH or a PDCCH in the first candidate occasion set, bit values of corresponding HARQ-ACK bits included in the first HARQ-ACK codebook are generated according to decoding results of the PDSCH or the PDCCH occupying the candidate occasions in the first candidate occasion set; and for candidate occasions not occupied by the PDSCH or the PDCCH in the first candidate occasion set, the bit values of the corresponding HARQ-ACK bits included in the first HARQ-ACK codebook are predefined.

As one embodiment, the technical feature of "the first HARQ-ACK codebook comprises an HARQ-ACK bit for a candidate occasion in the first candidate occasion set" comprises the following meaning: a correspondence relationship between HARQ-ACK bits in the first HARQ-ACK codebook and candidate occasions in the first candidate occasion set is predefined or configurable.

### Embodiment 11

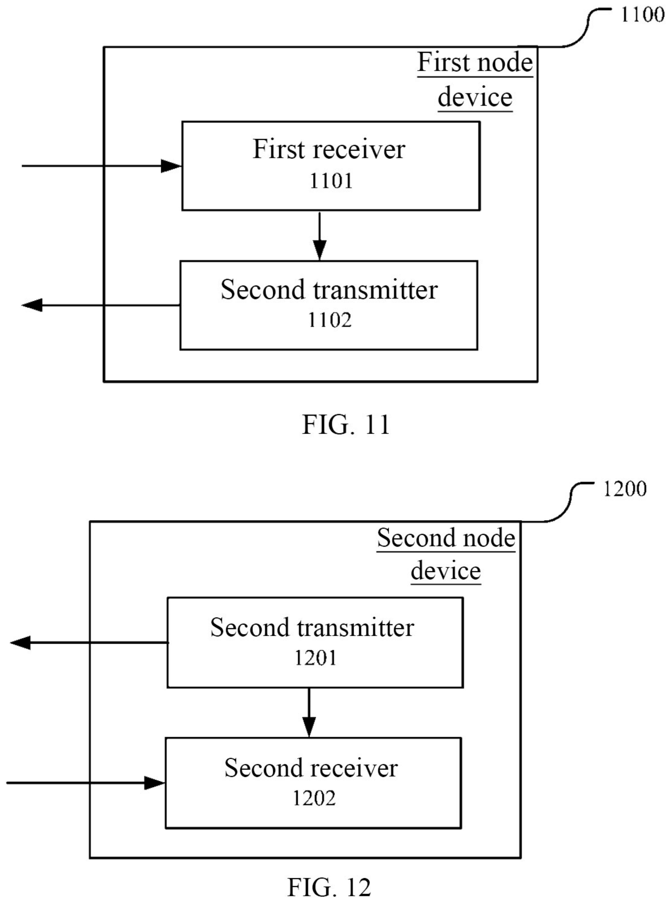

Embodiment 11 illustrates a structural block diagram of a processing device in a first node device of one embodiment, as shown in FIG. 11. In FIG. 11, a processing device 1100 of the first node device comprises a first receiver 1101 and a first transmitter 1102. The first receiver 1101 comprises a transmitting device/receiving device 456 (comprising an antenna 460), a receiving processor 452, and a controller/processor 490 in FIG. 4 of the present application; and the first transmitter 1102 comprises the transmitting device/receiving device 456 (comprising the antenna 460), a transmitting processor 455, and the controller/processor 490 in FIG. 4 of the present application.

In Embodiment 11, the first receiver 1101 receives a first TDD uplink/downlink configuration and receives a first information block, wherein the first information block is used for determining at least one first-type symbol, and a downlink symbol indicated by the first TDD uplink/downlink configuration and overlapping with the first-type symbol is used for uplink transmission; and the first transmitter 1102 sends a first signal, wherein the first signal is used for carrying a first HARQ-ACK codebook, wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

As one embodiment, the first information block is used for determining a first subband, and the first subband comprises at least one resource block; and a symbol indicated as a downlink by the first TDD uplink/downlink configuration and overlapping with the first-type symbol is used for uplink transmission in the first subband.

As one embodiment, a symbol indicated as a downlink by the first TDD uplink/downlink configuration and overlapping with the first-type symbol is used for downlink transmission in a second subband; and the second subband is not provided or the second subband is orthogonal to a downlink BWP.

As one embodiment, the first information block is used for indicating at least one of the first-type symbols from a periodic time window, the periodic time window comprises a plurality of consecutive symbols, and a time length of the periodic time window is related to a length of a slot format configuration period.

As one embodiment, the first transmitter 1102 sends a second information block, wherein the second information block is used for indicating at least one capability parameter value of a sender of the second information block, and the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook.

As one embodiment, any one symbol included in a PDSCH time domain resource indicated by any one row index included in the target row index set is not indicated as an uplink by the first TDD uplink/downlink configuration.

As one embodiment, the target row index set is used for determining a first candidate occasion set, and the first candidate occasion set comprises at least one candidate occasion; and the first HARQ-ACK codebook comprises an HARQ-ACK bit for a candidate occasion in the first candidate occasion set.

### Embodiment 12

Embodiment 12 illustrates a structural block diagram of a processing device in a second node device of one embodiment, as shown in FIG. 12. In FIG. 12, a processing device 1200 of the second node device comprises a second transmitter 1201 and a second receiver 1202. The second transmitter 1201 comprises a transmitting device/receiving device 416 (comprising an antenna 460), a transmitting processor 415, and a controller/processor 440 in FIG. 4 of the present application; and the second receiver 1202 comprises the transmitting device/receiving device 416 (comprising the antenna 460), a receiving processor 412, and the controller/processor 440 in FIG. 4 of the present application.

In Embodiment 12, the second transmitter 1201 sends a first TDD uplink/downlink configuration and sends a first information block, wherein the first information block is used for determining at least one first-type symbol, and a downlink symbol indicated by the first TDD uplink/downlink configuration and overlapping with the first-type symbol is used for uplink transmission; and the second receiver 1202 receives a first signal, wherein the first signal is used for carrying a first HARQ-ACK codebook, wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

As one embodiment, the first information block is used for determining a first subband, and the first subband comprises at least one resource block; and a symbol indicated as a downlink by the first TDD uplink/downlink configuration and overlapping with the first-type symbol is used for uplink transmission in the first subband.

As one embodiment, a symbol indicated as a downlink by the first TDD uplink/downlink configuration and overlapping with the first-type symbol is used for downlink transmission in a second subband; and the second subband is not provided or the second subband is orthogonal to a downlink BWP.

As one embodiment, the first information block is used for indicating at least one of the first-type symbols from a periodic time window, the periodic time window comprises a plurality of consecutive symbols, and a time length of the periodic time window is related to a length of a slot format configuration period.

As one embodiment, the second receiver 1202 receives a second information block, wherein the second information block is used for indicating at least one capability parameter value of a sender of the second information block, and the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook.

As one embodiment, any one symbol included in a PDSCH time domain resource indicated by any one row index included in the target row index set is not indicated as an uplink by the first TDD uplink/downlink configuration.

As one embodiment, the target row index set is used for determining a first candidate occasion set, and the first candidate occasion set comprises at least one candidate occasion; and the first HARQ-ACK codebook comprises an HARQ-ACK bit for a candidate occasion in the first candidate occasion set.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combinations. A first node device or the second node device or UE or the terminal in the present application includes but is not limited to mobile phones, tablet computers, notebook computers, network cards, low-power devices, eMTC devices, NB-IoT devices, vehicle-mounted communication devices, aircrafts, airplanes, drones, remote-controlled airplanes, test devices, test equipment, test instruments, and other devices. The base station device or base station or network-side device in the present application includes but is not limited to macrocellular base stations, microcellular base stations, Femtocells, relay base stations, eNBs, gNBs, transmitter receiver points (TRPs), relay satellites, satellite base stations, air base stations, test devices, test equipment, test instruments, and other devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the preceding description, and all changes within their equivalent meanings and areas are deemed to be included therein.

## Claims

1. A first node device for wireless communication, comprising:
a first receiver receiving a first TDD uplink/downlink configuration and receiving a first information block, wherein the first information block is used for determining at least one first-type symbol, and a downlink symbol indicated by the first TDD uplink/downlink configuration and overlapping with the first-type symbol is used for uplink transmission; and
a first transmitter sending a first signal, the first signal being used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

2. The first node device according to claim 1, wherein the first information block is used for determining a first subband, and the first subband comprises at least one resource block; and a symbol indicated as a downlink by the first TDD uplink/downlink configuration and overlapping with the first-type symbol is used for uplink transmission in the first subband.

3. The first node device according to claim 1 or 2, wherein a symbol indicated as a downlink by the first TDD uplink/downlink configuration and overlapping with the first-type symbol is used for downlink transmission in a second subband; and the second subband is not provided or the second subband is orthogonal to a downlink BWP.

4. The first node device according to any one of claims 1 to 3, wherein the first information block is used for indicating at least one of the first-type symbols from a periodic time window, the periodic time window comprises a plurality of consecutive symbols, and a time length of the periodic time window is related to a length of a slot format configuration period.

5. The first node device according to any one of claims 1 to 4, wherein the first transmitter sends a second information block, wherein the second information block is used for indicating at least one capability parameter value of a sender of the second information block, and the at least one capability parameter value of the sender of the second information block is used for reporting at least one of the following two: support for the downlink symbol indicated by the first TDD uplink/downlink configuration and overlapping with the first-type symbol being used for uplink transmission and support for generation of the first HARQ-ACK codebook.

6. The first node device according to any one of claims 1 to 5, wherein any one symbol included in a PDSCH time domain resource indicated by any one row index included in the target row index set is not indicated as an uplink by the first TDD uplink/downlink configuration.

7. The first node device according to any one of claims 1 to 6, wherein the target row index set is used for determining a first candidate occasion set, and the first candidate occasion set comprises at least one candidate occasion; and the first HARQ-ACK codebook comprises an HARQ-ACK bit for a candidate occasion in the first candidate occasion set.

8. A second node device for wireless communication, comprising:
a second transmitter sending a first TDD uplink/downlink configuration and sending a first information block, wherein the first information block is used for determining at least one first-type symbol, and a downlink symbol indicated by the first TDD uplink/downlink configuration and overlapping with the first-type symbol is used for uplink transmission; and
a second receiver receiving a first signal, the first signal being used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

9. A method in a first node for wireless communication, comprising:
receiving a first TDD uplink/downlink configuration and receiving a first information block, wherein the first information block is used for determining at least one first-type symbol, and a downlink symbol indicated by the first TDD uplink/downlink configuration and overlapping with the first-type symbol is used for uplink transmission; and
sending a first signal, the first signal being used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.

10. A method in a second node for wireless communication, comprising:
sending a first TDD uplink/downlink configuration and sending a first information block, wherein the first information block is used for determining at least one first-type symbol, and a downlink symbol indicated by the first TDD uplink/downlink configuration and overlapping with the first-type symbol is used for uplink transmission; and
receiving a first signal, the first signal being used for carrying a first HARQ-ACK codebook,
wherein the first HARQ-ACK codebook depends on a target row index set, the target row index set comprises at least one row index, any one row index included in the target row index set belongs to a candidate row index set, and any one row index included in the candidate row index set is used for indicating one PDSCH time domain resource; and a first row index is one row index included in the candidate row index set, at least one symbol included in a PDSCH time domain resource indicated by the first row index belongs to the first-type symbol, and the target row index set comprises at least one row index other than the first row index in the candidate row index set.
